# EUROPEAN PATENT SPECIFICATION

(11) **EP 2 084 246 B1**
(45) Date of publication and mention of the grant of the patent: **10.01.2018**
(21) Application number: 07839516.7
(22) Date of filing: 11.10.2007
(51) Int. Cl.: C10G 47/02, B01J 37/00, B01J 31/04, B01J 31/22, C10G 45/08

(54) **HYDROPROCESSING METHODS FOR BULK GROUP VIII/VIB METAL CATALYSTS**
HYDRIERUNGSVERFAHREN FÜR METALLKATALYSATOREN DER GRUPPE VIII ODER VI B
PROCÉDÉS D'HYDROTRAITEMENT DE CATALYSEURS MÉTALLIQUE MASSIQUES APPARTENANT AUX GROUPES VIII/VIB

(30) Priority: 11.10.2006 US 850849 P; 07.12.2006 US 873326 P; 19.12.2006 US 875703 P
(43) Date of publication of application: 05.08.2009
(73) Proprietor: ExxonMobil Research and Engineering Company, Annandale, NJ 08801-0900 (US)
(72) Inventor: HOU, Zhigou, Nazareth, PA 18064 (US); MCCONNACHIE, Jon M., Annandale, NJ 08801 (US); MIZAN, Tahmid, Bridgewater, NJ 08807 (US); BORGHARD, William G., Haddon Heights, NJ 08035 (US); LEWIS, William E., Baton Rouge, LA 70808 (US); ISMAIL, Niveen S., Yardley, PA 19067 (US); DANDEKAR, Ajit B., Bridgewater, NJ 08807 (US)
(74) Representative: ExxonMobil Chemical Europe Inc.
(86) International application number: PCT/US2007/021868
(87) International publication number: WO 2008/045550

(56) References cited:
- WO-A-02/04117
- WO-A-02/100985
- US-A- 5 122 258
- US-A- 6 068 758
- US-A1- 2005 040 080
- US-A1- 2006 196 809

## Description

### FIELD OF THE INVENTION

This invention relates to a method for hydroprocessing a feedstock and utilizing, in at least one catalyst stage, a bulk metallic catalyst formed by sulfidation of a catalyst precursor comprised of at least one Group VIII metal at least one Group VIB metal, and an organic compound-based component. The catalysts are prepared by a method wherein reagents containing the Group VIII and Group VIB metals, such as metal salts, are mixed with at least one organic complexing agent, that is an organic acid. The resulting mixture is heated and sulfided.

### BACKGROUND OF THE INVENTION

Increasingly stringent environmental regulations will require significant reductions in the sulfur content of transportation fuels. For example, by the end of this decade, maximum sulfur levels for distillate fuel will be limited to 10 wppm in Europe and Japan and 15 wppm in North America. To meet these ultra-low sulfur requirements without expensive modifications to existing refineries, it will be necessary to design a new generation of catalyst that has very high activity for desulfurization, particularly for distillate fuels at low to medium pressure.

In one approach, a family of compounds, related to hydrotalcites, e.g., ammonium nickel molybdates, has been prepared. Whereas X-ray diffraction analysis has shown that hydrotalcites are composed of layered phases with positively charged sheets and exchangeable anions located in the galleries between the sheets, the related ammonium nickel molybdate phase has molybdate anions in interlayer galleries bonded to nickel oxyhydroxide sheets. See, for example, Levin, D., Soled, S. L., and Ying, J. Y., Crystal Structure of an Ammonium Nickel Molybdate prepared by Chemical Precipitation, Inorganic Chemistry, Vol. 35, No. 14, p. 4191-4197 (1996). The preparation of such materials also has been reported by Teichner and Astier, Appl. Catal. 72, 321-29 (1991); Ann. Chim. Fr. 12, 337-43 (1987), and C. R. Acad. Sci. 304 (II), #11, 563-6 (1987) and Mazzocchia, Solid State Ionics, 63-65 (1993) 731-35.

Another approach is disclosed in U.S. Patent No. 6,162,350; 6,652,738, 6,635,599 and 6,534,437, which relates to a family of bulk Group VIII/Group VIB trimetallic catalysts for the removal of sulfur from distillate fuels. The preferred trimetallic catalysts are comprised of Ni-Mo-W and are prepared from a variety of catalyst precursor compounds.

Yet another approach is to combine the hydrotreating catalyst with additives. Examples of this approach are found in U.S. Patent Nos. 6,923,904 and 6,280,610. U.S. Patent 6,280,610 discloses a processes for reducing the sulfur content of a hydrocarbon feedstock which comprises subjecting a catalyst comprising a Group VIB metal component, a Group VIII metal component, and an organic additive on a carrier to an optional sulfidation step, and contacting a feedstock with the sulfided catalyst. In U.S. 6,923,904, the sulfidation step is not optional. In both patents, the catalyst is formed by impregnating a support with a Group VIB metal component, a Group VIII metal component, and an organic additive. The impregnated support is then heated to a temperature sufficient that maintains at least a portion of the additive on the support by avoiding decomposition or evaporation.

While some of the above mentioned catalysts have met with varying degrees of success, there is still a need in the art for ever more active catalysts to produce transportation fuels have ultra-low levels of sulfur, particularly for low pressure hydrotreating, e.g. a hydrogen partial pressure of less than 500 psig or less than 1000 psig.

### SUMMARY OF THE INVENTION

In an embodiment, a method is provided for hydroprocessing a feedstock. The method includes providing a reaction system with multiple catalyst stages, at least one of the stages containing a bulk metallic catalyst formed by sulfidation of a precursor composition comprising a Group VIII metal, a Group VIB metal, and from 10 wt.% to 60 wt.% of an organic compound-based component derived from an organic complexing agent that is an organic acid that contains a -COOH functional group and at least one additional functional group selected from carboxylic acid -COOH, hydroxmate acid -NOH-C=O, hydroxo -OH, keto -C=O, amine -NH2, amide: -CO-NH2, imine : -CNOH, epoxy: =COC=, or thiol: -SH, the catalyst precursor composition having a surface area of 16 m²/g or less measured by Brunauer-Ernett-Teller (BET) method, the carbon content of the catalyst after sulfidation being at least 10 wt%, and at least one additional catalyst stage containing a different catalyst; and further comprising a.) conducting a hydrocarbon feedstock through the at least one stage containing the catalyst formed from the precursor composition at hydrotreatment conditions, and conducting at least a portion of the hydrotreated feedstock through the at least one additional stage at second hydroprocessing conditions; or b.) conducting a hydrocarbon feedstock through the at least one additional stage containing the additional hydrotreatment catalyst at additional hydrotreatment conditions, and conducting at least a portion of the hydrotreated feedstock through the at least one stage containing a catalyst formed from the precursor composition at hydrotreatment conditions.

### BRIEF DESCRIPTION OF DRAWINGS

Figure 1 provides X-ray Diffraction (XRD) patterns for a bulk CoMo catalyst precursor according to an embodiment of the invention and a conventional CoMo catalyst.
Figures 2a and 2b provide data related to a Temperature Programmed Oxidation (TPO) analysis of a catalyst precursor according to an embodiment of the invention.
Figures 3a and 3b provide data related to a Temperature Programmed Reduction (H₂-TPR) analysis of a catalyst precursor according to an embodiment of the invention.
Figure 4 provides XRD patterns of a catalyst precursor and sulfided catalyst according to an embodiment of the invention.
Figure 5 provides a TEM of a sulfided catalyst according to an embodiment of the invention.
Figures 6a and 6b provide TEM images of sulfided catalysts according to embodiments of the invention.
Figure 7 provides data related to a TPO study of a sulfided catalyst according to an embodiment of the invention.
Figure 8 depicts hydrodesulfurization activity data for various catalysts.
Figure 9 depicts hydrodenitrogenation activity data for various catalysts.
Figure 10 depicts hydrodesulfurization and hydrodenitrogenation activity data for various catalysts.
Figure 11 depicts hydrodesulfurization activity data for various catalysts.
Figure 12 depicts hydrodenitrogenation activity data for various catalysts.
Figures 13 - 16 schematically show various process configurations for performing hydroprocessing according to embodiments of the invention.

### DETAILED DESCRIPTION OF THE INVENTION

In some embodiments, the catalysts utilized in the present invention are different than conventional catalysts typically used for hydroprocessing, such as hydrodesulfurization (HDS). The conventional method for improving HDS activity of a catalyst involving a Group VIB and a Group VIII metal, such as a CoMo catalyst, is to deposit the Group VIB and Group VIII active components on an alumina support. This can increase the dispersion of the active components and generate additional HDS activity. By contrast, the catalysts utilized in the invention are bulk catalysts formed by heating a catalyst precursor comprised of 40 wt.% to 90 wt.% of a Group VIII metal and a Group VIB metal, based on the total weight of the bulk catalyst particles. The weight of metal is measured as metal oxide. The balance of the catalyst precursor weight is an organic compound-based material. In an embodiment, the Group VIB metal is Mo or W. In another embodiment, the Group VIII metal is Co or Ni. In still another embodiment, the Group VIB metal is Mo and the Group VIII metal is Co. In yet another embodiment, the Group VIII metal is a non-noble metal.

Based on X-ray diffraction, it appears that the Group VIII metals and the Group VIB metals in the catalyst precursor after heating do not have the long range ordering typically found in materials that are primarily a crystalline oxide. Instead, in some embodiments it appears that the metals are complexed by the organic complexing agent in the catalyst precursor. The metals are complexed by the organic complexing agent when the metals and complexing agent are mixed together. The nature of the complex may change after one or more heating steps, as the organic complexing agent may undergo one or more conversions or reactions to form an organic compound-based component. In an alternative embodiment, the catalyst precursor can have some crystalline or nanocrystalline characteristics (based on XRD) in addition to having characteristics of metals that are complexed by the organic complexing agent.

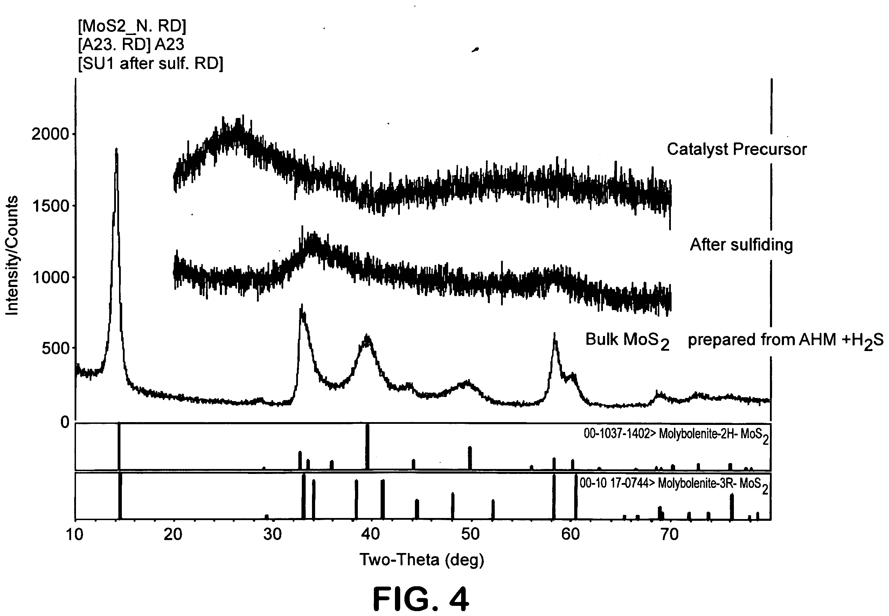

The X-ray Diffraction data provided in Figure 4 of this application was generated under the following conditions. X-ray powder diffraction analyses of the samples were obtained using a PANalytical X-pert PRO MPD, manufactured by PANalytical, Inc., and equipped with a X-Cellerator detector. The 2 theta scan used a Cu target at 45 kV and 40 mA. The diffraction patterns were taken in the range of 20° to 70° and 20° to 70° 2θ. The step size was 0.2 degrees and the time/step was 480 seconds. The remaining X-ray Diffraction data and patterns provided in this application were generated under the following conditions. X-ray powder diffraction analyses of the samples were obtained using a Bruker D4 Endeavor, manufactured by Bruker AXS and equipped with a Vantec-1 high-speed detector. The 2 theta scan used a Cu target at 35 kV and 45 mA. The diffraction patterns were taken in the range of 2° to 70° 2θ. The step size was 0.01794 degrees and the time/step was 0.1 second.

In this application, an "amorphous" catalyst or catalyst precursor refers to a catalyst or catalyst precursor that lacks the long range order or periodicity to have peaks in X-ray diffraction spectra that can be sufficiently distinguished from the background noise in the spectra, such as by determining a ratio of peak intensity versus background noise. Nanocrystalline catalyst or catalyst precursor refers to catalyst or catalyst precursor that has some crystallinity but with a grain size of less than 100 nm. This determination is made using X-ray diffraction spectra generated according to the conditions described above. Broadening of X-ray spectra occurs increasingly as particle sizes shrink, such as when grain sizes are < 100 nm, resulting in an XRD pattern with broadened or apparently non-existent peaks. It is also possible that amorphous or nanocrystalline phases can include crystalline phases with grain sizes of > 100 nm that are resolvable in the XRD. Without being bound by any particular theory, it is believed that the high activity of the catalyst systems according to various embodiments of the disclosure results from an amorphous and/or nanocrystalline component.

In an embodiment, the bulk catalyst particles formed by sulfidation of catalyst precursor particles can have a characteristic X-ray diffraction pattern of an amorphous material. Generally, it is believed that the long range ordering typically found in crystalline phases of Group VIII and Group VIB metal oxides and/or sulfides are not present in bulk catalysts formed according to the present disclosure. In particular, XRD spectra of catalysts and catalyst precursors according to the present disclosure either do not show crystalline phases of CoMo oxides, or alternatively only weakly show the crystalline CoMo oxide character. Without being bound by any particular theory, it is believed that the organic complexing agent and/or the resulting organic compound-based component interrupts or inhibits crystallization of oxides of the Group VIB and Group VIII metals. Instead of forming crystalline oxides with long range ordering, it is believed that at least a portion of the bulk catalyst particles have a structure that continues to involve some sort of complex with an organic compound-based component. This structure may be amorphous and/or crystalline on a length scale that is not readily resolved by XRD. The nature of the complexation may differ from the complexation present in the catalyst precursor. Additionally, at least a portion of the metals present in the catalyst can be in the form of metal sulfides, as opposed to complexed metals or amorphous/small crystal metal oxides.

The bulk catalyst precursor compositions of the present disclosure, obtained by mixing of metal reagents with an organic complexing agent and then heating and/or mixing, have a relatively low surface area (measured by Brunauer-Ernett-Teller method, or BET) of 16 m²/g or less. In another embodiment, the bulk catalyst precursor compositions have a surface area (measured by BET) of less than 10.0 m²/g, or less than 9.0 m²/g, or less than 7.5 m²/g, or less than 5.0 m²/g, or less than 4.0 m²/g, or less than 3.0 m²/g, or less than 2.5 m²/g. In still another embodiment, the bulk catalyst precursor compositions have a surface area of at least 0.05 m²/g, or at least 0.1 m²/g, or at least 0.25 m²/g. In a preferred embodiment, the bulk catalyst precursor compositions have a surface area of from 0.1 m²/g to 10.0 m²/g.

The molar ratio of Group VIII metal to Group VIB metal ranges generally from 1 to 10 to 10 to 1. Expressed as a fractional value, the molar ratio is generally from 0.1 to 10. Preferably, the ratio of Group VIII metal to Group VIB metal is less than 3, and more preferably less than 2. Preferably, the ratio of Group VIII metal to Group VIB metal is greater than 0.33, and more preferably greater than 0.5.

In other embodiments, the catalysts are supported catalysts wherein the supported catalyst particles are comprised of Group VIB metals, preferably Mo or W, most preferably Mo, plus Group VIII metals, preferably Group VIII non-noble metals, more preferably Co or Ni, most preferably Co, provided that the catalysts have a total metals content of at least 35 wt.%, calculated as metal oxides, and a residual organic carbon content of at least 5 wt. %, based on supported catalyst; with the balance being a carrier or support, wherein the carrier preferably has a minimum pore volume of 0.35 per volume of carrier, more preferably a minimum pore volume of 0.40. The Group designations are based on the Sargent-Welch Periodic Table, copyright 1968. As noted above, the catalyst contains an organic residue, preferably a carbon residue. The organic residue is a factor leading to increased activity of the catalyst for hydrotreating. In another embodiment, the catalysts are supported catalysts wherein the supported catalyst particles are comprised of Group VIB metals, preferably Mo or W, most preferably Mo, plus Group VIII metals, preferably Group VIII non-noble metals, more preferably Co or Ni, most preferably Co, provided that the catalysts have a total metals content of between 20-60 wt.%, preferably at least 20 wt.%, more preferably at least 30 wt.%, and even more preferably at least 35 wt.%, calculated as metal oxides, and a residual organic carbon content of between 1 - 50 wt.%, preferably between 5-20 wt.%, based on supported catalyst; with the balance being a carrier or support. The molar ratio of Group VIII non-noble metal to Group VIB metal in the supported catalysts ranges generally from 10 to 1 to 1 to 10. Preferably, the ratio of Group VIII non-noble metal to Group VIB metal is less than 3 to 1, and more preferably less than 2 to 1. Preferably, the ratio of Group VIII non-noble metal to Group VIB metal is greater than 1 to 3, and more preferably greater than 1 to 2. The metals are preferably present as organic complexes (or complexes of organic residues thereof) and/or oxides of the corresponding metals, or if the supported catalyst precursor has been sulfided to form the catalyst composition, sulfidic compounds of the corresponding metals. In an embodiment, the organic complex or organic residue complex can be based on an organic acid, such as a carboxylic acid.

Suitable carriers (supports) can include catalyst supports, such as refractories, such as silicon carbide, and metal oxides such as alumina, silica, silica-alumina, magnesia, zirconia, boria, yttria, titania and the like. Especially preferred are alumina and silica. Preferred aluminas are porous aluminas such as gamma, theta, delta, kappa, eta or mixtures of crystalline phases such as alpha and theta. The acidity and/or other properties of metal oxide supports can be controlled by adding promoters and/or dopants, or by controlling the nature of the metal oxide support, e.g., by controlling the amount of silica incorporated into a silica-alumina support. Examples of promoters and/or dopants include halogens, especially fluorine, phosphorus, boron, yttria, rare-earth oxides and magnesia. Promoters such as halogens generally increase the acidity of metal oxide supports while mildly basic dopants such as yttria or magnesia tend to decrease the acidity of such supports.

In an embodiment, the support or carrier can preferably possess large pore volume per volume of support. By large pore volume is meant that the support should have a pore volume of at least 0.35 cc/cc of support, preferably a pore volume of at least 0.40 cc/cc. The selection of supports having large pore volumes relates to maximizing the loading of impregnation solution per individual impregnation step.

It is within the scope of the present disclosure that the catalyst compositions also contain any additional component that is conventionally present in hydroprocessing catalysts such as an acidic component, e.g. phosphorus or boron compounds, additional transition metals, rare earth metals, main group metals such as Si or Al, or mixtures thereof. Suitable additional transition metals are, e.g. rhenium, ruthenium, rhodium, iridium, chromium, vanadium, iron, cobalt, platinum, palladium, cobalt, nickel molybdenum, zinc, niobium, or tungsten. All these metal compounds are generally present in the sulfided form if the catalyst composition has been sulfided. Prior to sulfidation, at least a portion of one or more of these metals can be complexed by the organic compound-based material in the catalyst precursor. After sulfidation, it is believed that at least a portion of the sulfided metals are still somehow directly or indirectly bounded by an organic compound-based material or residue in the catalyst.

The bulk metallic catalysts and supported catalysts according to the present disclosure are prepared by the controlled heating of Group VIII and Group VIB precursor compounds that are complexed with an organic complexing agent, preferably in the form of an organic acid. Preferably, the organic complexing agent is a metal binding group or chelating agent. Preferably, the organic complexing agent is a bidentate ligand. Preferably, the organic complexing agent is suitable for forming metal-ligand complexes in solution.

In an embodiment where a bulk catalyst precursor or a supported catalyst precursor is formed from a solution containing the Group VIII metal, Group VIB metal, and organic complexing agent, it is preferred that both the Group VIII compound and the Group VIB compound be water soluble salts in the appropriate predetermined concentration to yield the desired molar ratios as mentioned above. The more preferred Group VIII metals are Co and Ni, with Co being the most preferred. Preferably, the Group VIII metals are non-noble metals. The more preferred Group VIB metals are Mo and W, with Mo being the most preferred. Non-limiting examples of suitable Co precursor compounds include carbonates, nitrates, sulfates, acetates, chlorides, hydroxides, propionates, glycinates, hydroxycarbonates, acetyl acetates, acetyl acetonates, metallic Co(0), Co oxides, Co hydrated oxides, Co carboxylates (in particular Co glyoxylate), Co citrate, Co gluconate, Co tartrate, Co glycine, Co lactate, Co naphthenate, Co oxalate, Co formate, and mixtures thereof, including ammonium or amine forms of the above. Preferred molybdenum and tungsten precursor compounds include alkali metal or ammonium molybdate (also peroxo-, di-, tri-, tetra-, hepta-, octa-, or tetradecamolybdate), molybdic acid, phosphomolybdic acid, phosphotungstic acid, Mo-P heteropolyanion compounds, W-Si heteropolyanion compounds, Co-Mo-W heteropolyanion compounds, alkali metal or ammonium tungstates (also meta-, para-, hexa-, or polytungstate), acetyl acetonates, and mixtures thereof. In still other embodiments, any suitable Group VIII or Group VIB metal reagent can be used to prepare Group VIII or Group VIB metal solutions.

Non-limiting examples of organic complexing agents suitable for use herein include pyruvic acid, levulinic acid, 2-ketogulonic acid, keto-gluconic acid, thioglycolic acid, 4-acetylbutyric acid, 1,3-acetonedicarboxylic acid, 3-oxo propanoic acid, 4-oxo butanoic acid, 2,3-diformyl succinic acid, 5-oxo pentanoic acid, 4-oxo pentanoic acid, ethyl glyoxylate, glycolic acid, glucose, glycine, oxamic acid, glyoxylic acid 2-oxime, ethylenediaminetetraacetic acid, nitrilotriacetic acid, N-methylaminodiacetic acid, iminodiacetic acid, diglycolic acid, malic acid, gluconic acid, acetylacetone, and citric acid. Preferred organic acids are glyoxylic acid, oxalacetic acid, 2-ketogulonic acid, alpha-ketoglutaric acid, 2-ketobutyric acid, pyruvic acid, keto-gluconic acid, thioglycolic acid, and glycolic acid. Most preferred are glyoxylic acid and oxalacetic acid.

The organic complexing agent is an organic acid that contains a -COOH functional group and at least one additional functional group selected from carboxylic acid - COOH, hydroxamic acid -NOH-C=O, hydroxo -OH, keto -C=O, amine -NH2, amide: -CO-NH2, imine : -CNOH, epoxy: =COC=, or thiol: -SH. Preferably, the organic complexing agent is a bidentate ligand.

The process for preparing the bulk catalysts of the present disclosure comprises multiple steps. The first step is a mixing step wherein at least one Group VIII metal reagent, at least one Group VIB metal reagent, and at least one organic complexing agent are combined together. In an embodiment, one or more of the metal reagents and organic complexing agent can be provided in the form of solutions, such as aqueous solutions. In another embodiment, one or more of the metal reagents and organic complexing agent can be provided in the form of slurries. In still another embodiment, one or more of the metal reagents and organic complexing agent can be provided in the form of a solid material. Those of skill in the art will recognize that still other forms of providing the organic complexing agent and metal reagent are possible, and that any suitable form (solution, slurry, solid, etc.) can be used for each individual reagent and/or organic complexing agent in a given synthesis.

The metal reagents and organic complexing agent are mixed together to form a precursor mixture. In an embodiment where one or more of the metal reagents or organic complexing agent are provided as a solution or slurry, mixing can involve adding the metal reagents and organic complexing agent to a single vessel. If one or more of the metal reagents and organic complexing agent are provided as solids, mixing can include heating the organic complexing agent to a sufficient temperature to melt the complexing agent. This will allow the organic complexing agent to solvate any solid metal reagents.

The temperature during mixing is preferably from ambient temperature to the boiling point of the solvent. The preparation can be performed in any suitable way. For example, in embodiments involving solutions and/or slurries, separate solutions (or slurries) can be prepared from each of the catalytic components. That is, a Group VIII metal compound in a suitable solvent and a Group VIB metal in a suitable solvent can be formed. Non-limiting examples of suitable solvents include water and the C₁ to C₃ alcohols. Other suitable solvents can include polar solvents such as alcohols, ethers, and amines. Water is a preferred solvent. It is also preferred that the Group VIII metal compound and the Group VIB compound be water soluble and that a solution of each be formed, or a single solution containing both metals be formed. The organic complexing agent can be prepared in a suitable solvent, preferably water. The three solvent components can be mixed in any sequence. That is, all three can be blended together at the same time, or they can be sequentially mixed in any order. In an embodiment, it is preferred to first mix the two metal components in an aqueous media, than add the organic complexing agent.

The process conditions during the mixing step are generally not critical. It is, e.g., possible to add all components at ambient temperature at their natural pH (if a suspension or solution is utilized). It is generally preferred to keep the temperature below the boiling point of water, i.e., 100°C to ensure easy handling of the components during the mixing step. However, if desired, temperatures above the boiling point of water or different pH values can be used. In an embodiment where the organic complexing agent is an acid or base having a conjugate base/acid, the pH of the mixture can be adjusted to drive the acid/base equilibrium toward a desired form. For example, if the organic complexing agent is an acid, the pH of the solution can be raised to drive the equilibrium toward formation of more of the conjugate base. If the reaction during the mixing step is carried out at increased temperatures, the suspensions and solutions that are added during the mixing step are preferably preheated to an increased temperature which can be substantially equal to the reaction temperature.

The amount of metal precursors and organic complexing agent in the mixing step should be selected to achieve preferred ratios of metal to organic compound-based material in the catalyst precursor after heating. These preferred ratios result in highly active bulk catalysts. For example, the ratio of organic acid to total metal in the mixed solution (or other mixture of metal reagents and organic complexing agent) should reach a minimum level that results in a highly active catalyst.

In an embodiment, the amount of organic complexing agent used in the mixed solution should be enough to provide at least 10 wt% of organic compound-based material in the catalyst precursor formed after heating, or at least 20 wt%, or at least 25 wt%, or at least 30 wt%. In another embodiment, the amount of organic complexing agent used in the mixed solution should provide less than 60 wt% of organic compound-based material in the catalyst precursor formed after heating, or less than 40 wt%, or less than 35 wt%, or less than 30 wt%. Preferably, the amount of organic complexing agent used in the mixed solution is enough to provide between 20 wt% and 35 wt% of organic compound-based material in the resulting catalyst precursor. A desired amount of organic compound-based material in the catalyst precursor can be achieved based on the amount of organic complexing agent to metal ratio in the mixed solution and based on the thermal activation conditions used to form the catalyst precursor. The term "organic compound-based material" refers to the carbon containing compound present in either the catalyst precursor after heating, or in the catalyst after sulfidation. The organic compound-based material is derived from the organic complexing agent, but may be modified due to heating of the catalyst precursor and/or sulfidation of the precursor to form the catalyst. Note that the eventual form of the organic compound-based material may include carbon not traditionally considered as "organic", such as graphitic or amorphous carbon. The term organic compound-based material used here specifies only that the carbon was derived originally from the organic complexing agent and/or another organic carbon source used in forming the catalyst precursor.

For this disclosure, the weight percentage of organic compound-based material in the catalyst precursor was determined by performing a Temperature Programmed Oxidation on the catalyst precursor under the following conditions. Temperature Programmed Oxidation using TGA/MS was performed on dried and heated samples. The TGA/MS data was collected on a Mettler TGA 851 thermal balance which was interfaced with a quadrupole mass spectrometer equipped with a secondary electron multiplier. Between 20 and 25 mg of sample was heated at 4°C /min from ambient temperature to 700°C in flowing 14.3% O₂ in He (77cc/min) at one atmosphere total pressure. In the TGA/MS experiments, the effluent gas was carried over to the MS instrument via a capillary line and specific m/e fragments such as 18 (H₂O), 44 (CO₂), 64 (SO₂) were analyzed as markers for the decomposition products and qualitative correlation with gravimetric / heat effects.

The weight percentage of material lost during a TPO procedure represents the weight percentage of organic compound-based material. The remaining material in the catalyst precursor is considered to be metal in the form of some type of oxide. For clarity, the weight percent of metal present in the catalyst precursor is expressed as metal oxide in the typical oxide stoichiometry. For example, weights for cobalt and molybdenum are calculated as CoO and MoO₃, respectively.

A similar calculation can be performed to determine the weight percentage of organic compound-based component in the catalyst formed after sulfidation. Once again, the weight percent of organic compound-based component is determined by TPO, according to the method described above. The remaining weight in the catalyst corresponds to metal in some form, such as oxide, oxysulfide, or sulfide.

The amount of organic complexing agent used in the mixed solution should also be enough to form metal-organic complexes in the solution under reaction conditions. In an embodiment where the complexing agent is an organic acid, the ratio of carboxylic acid groups of the organic acids to metals can be at least 1 (meaning that about the same number of carboxylic acid groups and metal atoms are present), or at least 2, or at least 3. In another embodiment, the ratio of carboxylic acid groups to metals can be 12 or less, or 10 or less, or 8 or less.

In another embodiment, the molar ratio used in the mixing solution of organic complexing agent to metals is 6.0 or less, or 5.5 or less, or 5.0 or less, or 4.8 or less, or 4.6 or less. In another embodiment, the molar ratio used in the mixing solution of organic complexing agent to metals is 1.5 or more, or 2 or more, or 2.5 or more, or 3.0 or more, or 3.5 or more.

In a preferred embodiment, the molar ratio of the Group VIII metal to the Group VIB metal is at least 0.1, or at least 0.2, or at least 0.33, or at least 0.5. In another preferred embodiment, the molar ratio of the Group VIII metal to the Group VIB metal is 0.9 or less, or 0.6 or less.

In another embodiment, a support can be impregnated with a solution, slurry, or mixture composed of a Group VIB metal, a Group VIII metal, and an organic solvent. In such an embodiment, water is not used as a solvent. Instead, the organic complexing agent is used as the organic solvent. The Group VIB metal and Group VIII metal can be provided as salts. In a preferred embodiment, at least one of the Group VIB metal salt and the Group VIII metal salt are formed using an anion that is the conjugate base of the solvent. For example, when 2,4-pentanedione (acetylacetone) is used as a solvent, either the acetyl acetonate salt of a Group VIB metal, such as molybdenum, or the acetyl acetonate salt of a Group VIII metal, such as cobalt, or both could be used to form the solution, slurry, or mixture. In a preferred embodiment, impregnation of a catalyst with this type of solution is performed by using an amount of solution that is similar to the pore volume of the catalyst. For example, per volume of catalyst, the volume of solution used can be from 0.9 times to 1.05 times the pore volume of the catalyst. Preferably, a sufficient level of metal can be impregnated in the support with a single impregnation using this type of solution. Example 16 provides further details regarding a catalyst formed according to this embodiment of the present disclosure.

In various other embodiments, the impregnation solution may be an aqueous solution and includes a soluble Group VIII metal component, a soluble Group VIB metal component, at least one organic complexing agent and optionally, an organic additive. In embodiments where a solvent different from the organic complexing agent is used, the molar ratio of the organic complexing agent (such as carboxylic acid) to Group VIII metal component plus Group VIB metal component is from 1 to 10, preferably at least 2, and preferably less than 6. In an alternative embodiment where the organic acid includes multiple acid functional groups (such as multiple -COOH groups), the ratio of organic acid functional groups to the group VIII metal component plus Group VIB metal component can be from 1 to 10, preferably at least 2, and preferably less than 6. The Group VB/Group VIII metal component may be added as a metal compound of limited solubility, e.g., CoCO₃, provided that the metal compound of limited solubility reacts with the organic acid component to form a soluble metal salts. The order of mixing of metal components is not critical and the process conditions for mixing process conditions during the mixing step are generally not critical. In an embodiment, it is preferred to solubilize metal components of limited solubility prior to adding the other metal components. It is, e.g., possible to add all components at ambient temperature at their natural pH (if a suspension or solution is applied), again provided that it is preferred to solubilize metal components of limited solubility prior to adding the other metal components.

In preferred embodiments involving a support, the impregnation solution is added to the support (the support preferably having the pore volume range noted above), preferably at temperatures from 20 to 80°C, using the incipient wetness technique. The volume of the impregnation solution may be more than the water pore volume of the support, for example, 1.2 times the water pore volume, in order to increase the amount of metal oxides on the support. Preferably, the support should be mixed, such as gently stirred, as impregnation solution is added to the fresh support to ensure even distribution of the metal compounds over the support. In incipient wetness impregnation, the water pore volume of the support is determined first. The same volume of the impregnation solution is added to the support so that all solution would go into the support. A slightly larger volume may be used to get more metals onto the support. For example, if the water pore volume of the support is 1.22 cc/g of support, 1.5 cc (23% more) of impregnation solution can be used for every gram of support.

The impregnated support may then be dried and subjected to at least one additional impregnation cycle. Typically, samples are dried at temperatures and for a time sufficient to dry the sample. Such temperatures may be from 60 - 120°C in air or inert atmosphere. The impregnated support may also be heated at drying temperatures of from 200 to 450°C for a time sufficient to yield a partially calcined catalyst having a residual organic carbon content of at least 5 wt. %, based on the calcined catalyst. It is believed that calcination makes more pore volume accessible for the following impregnation. The impregnation and mixing conditions may be the same as noted above for subsequent impregnation cycles following the first impregnation cycle.

If the total metals content of the supported catalyst precursor attains the target metals content, further impregnation cycles are not needed. If the target metals content is not attained, the impregnation cycles are continued until the desired metals content is attained. Amount of metals on support may be calculated based on the metal concentrations and volumes of the impregnation solution used for the impregnation. The metal contents may be further verified by any suitable analytical techniques for metals content, such as ICP, XRF, and the like.

The second step in the process for preparing the catalysts of the present disclosure is a heating step. In an embodiment, the heating step is used to remove water from the mixture. In another embodiment, the heating step is used to form an organic compound-based component in the catalyst precursor. The organic compound-based component is the product of heating the organic complexing agent used in the mixing solution. The organic complexing agent may be substantially similar to the organic compound-based component, or the organic compound-based component may represent some type of decomposition product of the organic complexing agent. Alternatively, without being bound by any particular theory, heating of the organic complexing agent may result in cross linking of the complexing agent to form an organic compound-based component.

It is within the scope of this disclosure that the heating and/or drying be performed in multiple phases according to a heating profile. In an embodiment, the first phase of the heating profile is a partial drying phase, preferably performed at a temperature from 40°C to 60°C in a vacuum drying oven for an effective amount of time. An effective amount of time corresponds to a time sufficient to remove water to the point of gel formation. Typically it is believed a gel will form when from 80% to 90% of the water is removed. In embodiments where the mixture of the metal reagents and the organic complexing agent is in the form of a solution or slurry, it is preferred to agitate the mixture of metal reagents and organic complexing agent components at ambient temperature for an effective period of time to ensure substantial uniformity and dissolution of all components prior to heating. Alternatively, in embodiments where the organic complexing agent is provided as a solid, an initial heating phase can correspond to heating used to melt the organic complexing agent. The temperature of the mixture can be maintained for an effective amount of time to allow the melted organic complexing agent to solvate and/or mix with the metal reagents.

In an embodiment, the next heating or drying phase in the heating profile is to raise the temperature to 110°C to 130°C, preferably from 110°C to 120°C, to drive off additional water to the point that high temperature heating can be done without causing boiling over and splashing of solution. At this point the gel will be transformed into a solidified material. The effective amount of time to form the dried material, that is from gel formation to solidified material, can be from seconds to hours, preferably from 1 minute to several days, more preferably from 1 minute to 24 hours, and still more preferably from 5 minutes to 10 hours. The gel, upon solidification and cooling to room temperature can also take the form of a black rubbery solid material. The gel or solidified material can be brought to ambient temperature and saved for future heating at higher temperatures. In the alternative, the gel or solidified material can be used as a catalyst precursor at this stage.

It is within the scope of this disclosure to grind the solid material to a powder before or after thermal activation. The grinding can take place prior to any heating steps at temperatures of 275°C or greater, or the grinding can take place after heating to 275°C or greater. Any suitable grinding technique can be used to grind the solid material.

The catalyst precursor can be subjected to a further heating stage to partially decompose materials within the catalyst precursor. This additional heating stage can be carried out at a temperature from 100°C to 500°C, preferably from 250°C to 450°C, more preferably from 300°C to 400°C, and still more preferably from 300°C to 340°C, for an effective amount of time. This effective amount of time will range from 0.5 to 24 hours, preferably from 1 to 5 hours. In another embodiment, heating can be accomplished by ramping the temperature in a furnace from room temperature to 325°C in one hour. In an embodiment, the heating (including possible decomposition) can be carried out in the presence of a flowing oxygen-containing gas such as air, a flowing inert gas such as nitrogen, or a combination of oxygen-containing and inert gases. In another embodiment, the heating can be carried out in the atmosphere present in the furnace at the beginning of the heating process. This can be referred to as a static condition, where no additional gas supply is provided to the furnace during heating. The atmosphere in the furnace during the static condition can be an oxygen-containing gas or an inert gas. It is preferred to carry out the heating in the presence of an inert gas atmosphere, such as nitrogen. Without being bound by any particular theory, the material resulting from this additional heating may represent a partial decomposition product of the organic complexing agent, resulting in the metals being complexed by an organic compound-based material or component.

As previously mentioned, the heating step can be performed in a variety of ways. The heating step can start with one or more initial heating stages at a lower temperature followed by heating at a temperature of 275°C or greater. In other embodiments, the heating profile can include only temperatures of 130°C or lower, or the heating profile can include immediately ramping the temperature to 275°C or greater, or 325°C or greater. Preferably, the preparation conditions can be controlled and designed so that the mixed solution does not go through violent evaporation, spill or interruption during the entire heating profile. Such embodiments typically involve an initial heating at a temperature below 100°C. However, in another embodiment, the heating profile can include conditions that lead to rapid evaporation while the catalyst precursor still contains a substantial amount of water. This can lead to boiling or splashing of the mixture used to form the catalyst precursor. While boiling or splashing of the mixture for forming the catalyst precursor is inconvenient, it is believed that catalyst precursor according to the present disclosure will still be formed under these conditions.

In contrast to conventional hydroprocessing catalysts, which typically are comprised of a carrier impregnated with at least one Group VIII metal and at least one Group VIB metal, the catalysts of the present disclosure are bulk catalysts.

Without being bound by any particular theory, it is believed that the organic complexing agent and/or the resulting organic-compound based component plays a role in the unexpected high activity of the final catalysts. It is believed that the organic complexing agent and/or the resulting organic compound-based component either assists in stabilization of the metal particles and/or directly interacts with metal active sites and prevents the metal from agglomerating. In other words, the organic complexing agent and/or organic compound-based component enhances the dispersion of the active sites. When a catalyst precursor is formed with an amount of organic compound-based component that is less than the desired range, the activity of the resulting catalyst is lower.

A bulk powder catalyst precursor composition according to the present disclosure, obtained after grinding and heating, can be directly formed into shapes suitable for a desired catalytic end use. Alternately, the bulk powder can be mixed with a conventional binder material then formed into the desired shapes. If a binder is used, it may be either introduced before or after decomposition (heating) of the mixture used to form the catalyst precursor. Examples of potential binders include Actigel clay, available from Active Minerals International of Hunt Valley, MD; Nyacol 2034 DI, available from Nyacol Nano Technologies, Inc. of Ashland, MA; or a Si-resin, such as Q-2230 available from Dow Corning. In still another embodiment, a binder precursor, such as silicic acid, Si acetate, or Al acetate, may be added to the mixture used for synthesizing the catalyst precursor.

The third step in the preparation of the catalysts of the present disclosure is a sulfidation step. Sulfidation is generally carried out by contacting the catalyst precursor composition with a sulfur containing compound, such as elemental sulfur, hydrogen sulfide or polysulfides. Sulfidation can also be carried out in the liquid phase utilizing a combination of a polysulfide, such as a dimethyl disulfide spiked hydrocarbon stream, and hydrogen. The sulfidation can be carried out subsequent to the preparation of the bulk catalyst composition but prior to the addition of a binder, if used.

If the catalyst composition is used in a fixed bed process, sulfidation is preferably carried out subsequent to the shaping step. Sulfidation may be carried out ex situ or in situ. For *ex situ* sulfidation, sulfidation is carried out in a separate reactor prior to loading the sulfided catalyst into the hydroprocessing unit. *In situ* sulfidation is preferred and for *in situ* sulfidation the sulfidation is carried out in the same reactor used for hydroprocessing.

In an embodiment, the sulfidation step can be a liquid sulfidation. In such an embodiment, the bulk catalyst can be sulfided by exposing the catalyst to a feedstock spiked with 1.36% by weight of dimethyl disulfide. Alternatively, the spiking level of dimethyl disulfide can be between 0.5 and 2.5% by weight. The catalyst can be exposed to the feed at a pressure of 500 psig at a LHSV of 1.0 and hydrogen flow rate of 700 scf/B. Preferably, the catalyst can be exposed to the feed for an initial period of time, such as 18 hours, at a temperature of 425°F (218°C), followed by a second period of time, such as 24 hours, at a temperature of 625°F (329°C). In other embodiments, other conventional methods of sulfidation can be used.

In another embodiment involving liquid sulfidation, the catalyst can be sulfided using temperature and pressure conditions that are more severe than the expected eventual processing conditions. For example, if the sulfided catalyst will be used for processing a feedstock at a pressure of 150 psig, the sulfidation can be performed at a higher pressure to reduce the time needed to achieve sulfidation of the catalyst.

In various embodiments, the catalyst formed after sulfidation is believed to have at least in part a structure involving complexation or another interaction of metals by/with an organic compound-based component. The nature of the organic compound-based component in the sulfided catalyst may differ from the organic compound-based component in the catalyst precursor and the organic complexing agent used in the initial mixture to form the catalyst precursor. Note that in the Examples below, the carbon and sulfur species in the sulfided catalyst appear to oxidize and leave the catalyst at a similar time in Temperature Programmed Oxidation studies. One possible interpretation for these TPO studies is the presence of a complex (or some other type of interaction) between the organic compound-based component and metals in at least a portion of the catalyst structure.

In an embodiment, the carbon content of the catalyst after sulfidation is at least 10 wt% or at least 12 wt%. In another embodiment, the carbon content of the catalyst after sulfidation is 25 wt% or less or 20 wt% or less.

After sulfidation, at least a portion of the metal in the catalyst will be in a sulfided form. In particular, the Group VIB metal will form stacks of sulfided metal believed to have a MeS₂ stoichiometry, where Me represents the Group VIB metal. For example, if Mo is the Group VIB metal, stacks of MoS₂ will be formed. In catalysts formed according to the present disclosure, the average stack height of the sulfided Group VIB metal will be from 1.2 to 2. In another embodiment, the average stack height will be at least 1.2, or at least 1.3, or at least 1.4, or at least 1.5. In still another embodiment, the average stack height will be 2.2 or less, or 2.1 or less, or 2.0 or less, or 1.9 or less. Without being bound by any particular theory, it is believed that a lower stack height corresponds indirectly to increased activity.

The catalyst compositions of the present disclosure are particularly suitable for hydroprocessing hydrocarbon feeds. Examples of hydroprocessing processes include hydrogenation of unsaturates, hydrodesulfurization, hydrodenitrogenation, hydrodearomatization and mild hydrocracking. Preferred are hydrodesulfurization and hydrodenitrogenation. Conventional hydroprocessing conditions include temperatures from 250° to 450°C, hydrogen pressures of from 5 to 250 bar, liquid hourly space velocities of from 0.1 to 10 h⁻¹, and hydrogen treat gas rates of from 90 to 1780 m³/m³ (500 to 10000 SCF/B).

Feedstocks on which the present invention can be practiced are those petroleum feedstreams boiling in the distillate range. This boiling range will typically be from 140°C to 360°C and includes middle distillates, and light gas oil streams. Non-limiting examples of preferred distillate streams include diesel fuel, jet fuel and heating oils. The feedstocks can contain a substantial amount of nitrogen, e.g. at least 10 wppm nitrogen, and even greater than 1000 wppm, in the form of organic nitrogen compounds. The feedstocks can also contain a significant sulfur content, ranging from 0.1 wt.% to 3 wt.%, or higher.

The hydroprocessing of the present invention also includes slurry and ebullating bed hydrotreating processes for the removal of sulfur and nitrogen compounds, and the hydrogenation of aromatic molecules present in light fossil fuels, such as petroleum mid-distillates, particularly light catalytic cycle cracked oils (LCCO). Distillates derived from petroleum, coal, bitumen, tar sands, or shale oil are likewise suitable feeds. Hydrotreating processes utilizing a slurry of dispersed catalysts in admixture with a hydrocarbon feed are generally known. For example, U.S. Pat. No. 4,557,821 to Lopez et al discloses hydrotreating a heavy oil employing a circulating slurry catalyst. Other patents disclosing slurry hydrotreating include U.S. Pat. Nos. 3,297,563; 2,912,375; and 2,700,015. The slurry hydroprocessing process of this invention can be used to treat various feeds including mid-distillates from fossil fuels such as light catalytic cycle cracking oils (LCCO).

Hydrogenation conditions include reactions in the temperature range of 100°C to 350°C and pressures from five atmospheres (506 kPa) and 300 atmospheres (30,390 kPa) hydrogen, for example, 10 to 275 atmospheres (1,013 kPa to 27,579 kPa). In one embodiment the temperature is in the range including 180°C and 320°C and the pressure is in the range including 15,195 kPa and 20,260 kPa hydrogen. The hydrogen to feed volume ratio to the reactor under standard conditions (25°C, 1 atmosphere pressure) will typically range from 20-200, for water-white resins 100-200.

Process conditions applicable for the use of the catalysts described herein may vary widely depending on the feedstock to be treated. Thus, as the boiling point of the feed increases, the severity of the conditions will also increase. The following table serves to illustrate typical conditions for a range of feeds.

| **FEED** | **TYPICAL BOILING RANGE °C** | **TEMP.°C** | **PRESS, BAR** | **SPACE VELOCITY V/V/HR** | **H₂ GAS RATE SCF/B** |
|---|---|---|---|---|---|
| naphtha | 25-210 | 100-370 | 10-60 | 0.5-10 | 100-2,000 |
| diesel | 170-350 | 200-400 | 15-110 | 0.5-4 | 500-6,000 |
| heavy gas oil | 325-475 | 260-430 | 15-170 | 0.3-2 | 1000-6,000 |
| lube oil | 290-550 | 200-450 | 6-210 | 0.2-5 | 100-10,000 |
| residuum | 10-50%>575 | 340-450 | 65-1100 | 0.1-1 | 2,000-10,000 |

While the invention described herein shows enhanced activity for hydrodenitrogenation, most HDN catalysts will also show hydrodesulfurization (HDS) and hydrogenation activities. Consequently, the catalysts and processes described herein will be useful on feeds containing both nitrogen and sulfur, and will be particularly useful on feeds high in nitrogen.

The following examples will serve to illustrate, but not limit this invention.

### Example 1 - Catalyst Precursor Synthesis

Bulk CoMo catalysts were prepared by a controlled heating process according to an embodiment of the disclosure. AIM Mo aqueous solution was prepared by dissolving the appropriate amount of ammonium heptamolybdate tetrahydrate (AHM) in distilled water. A 1 M Co aqueous solution was also prepared by dissolving the appropriate amount of cobalt acetate tetrahydrate in distilled water. A 4.5 M glyoxylic acid solution was prepared by a 1:1 dilution with distilled water of 50% glyoxylic acid aqueous solution.

A mixture was prepared by mixing together appropriate amounts of the above three solutions. The resulting solution had a reddish color. The ratio of Mo to Co in the solution was 2:1. Two bulk catalyst precursor mixtures were prepared. One catalyst precursor mixture had a molar ratio of glyoxylic acid/(Mo + Co) of 4.8, and is designated Catalyst Precursor A. A second catalyst precursor mixture designated Catalyst Precursor B was prepared having a molar ratio of glyoxylic acid/(Mo + Co) of 6. The catalyst precursor mixtures were heated at 55°C for about 4 hours, then at 120°C for about an additional 4 hours. The result for each catalyst precursor was a black viscous substance. The black viscous substance was then cooled to room temperature wherein it solidified. The solidified black substance was ground to a powder and placed in a tube furnace whereupon the temperature was ramped from about room temperature to about 325°C in one hour. The catalyst precursor compositions were then heated at a temperature of about 325°C in air for about 4 hours.

Samples of the two catalyst precursor powders were crushed into fines using an agate mortar and pestle. A portion of the precursor powders were sulfided to produce catalyst powder.

The BET surface area and carbon content were measured for the catalyst precursor compositions of Catalyst Precursor A and Catalyst Precursor B as well as for a CoMo catalyst precursor prepared similarly, but without the use of an organic acid (Comparative Catalyst 1). The results are shown in Table 1 below. X-ray diffraction showed that both samples of the bulk catalyst precursors of the present disclosure were amorphous in characteristic, and do not exhibit the long range order typically observed in XRD when large scale crystallized phases are present. The X-ray diffraction pattern for Comparative Catalyst 1 showed crystallized MoO₃ and CoMoO₄, which are typically regarded as undesirable catalyst precursors for hydrotreating processes. It is believed that residual carbon inside the catalyst precursors of the present disclosure interrupts the crystallization of CoMo oxides so that CoMo oxide crystals either are not present or are present as small crystals that introduce little or no crystalline character into XRD spectra.

**Table 1**

| Catalyst | BET SA (m²/g) | Carbon Content (wt.%) |
|---|---|---|
| Catalyst Precursor A CoMo-6-Gly | 15.6 | 23.8 |
| Catalyst Precursor B CoMo-4.8-Gly | <1 | 21.9 |
| Comparative Catalyst 1 CoMo Prepared Without Organic Acid | 20 | 0.22 |

It can be seen from Table 1 above that the bulk CoMo-6-Gly and CoMo-4.8-Gly catalyst precursors have relatively low surface areas. In particular, catalyst precursor CoMo-4.8 has a surface area less than 1 m²/g. After heating, both catalyst precursors of this disclosure contain substantial amounts of carbon of 22 to 24 wt.%. The carbon content of the catalyst precursors of this disclosure is a function of the heating conditions the catalysts experienced, i.e., the time and the temperature of the heating profile, as well as the ratios of glyoxylic acid/(Mo + Co) metal. The carbon content in the bulk CoMo catalyst precursors influences the morphology of the CoMo in such precursors and the resulting hydrodesulfurization catalytic activities of the sulfided catalysts.

### Example 1B - Additional Catalyst Precursor Synthesis Examples

1 M solutions of ammonium heptamolybdate tetrahydrate and cobalt acetate tetrahydrate were used to form additional catalyst precursors. A solution containing 5.7 wt% AHM, 4.0 wt% Co Acetate, and 17.3 wt% glyoxylic acid was formed by mixing appropriate amounts of the 1 M Mo and Co solutions with a solution containing 25 wt% of glyoxylic acid. The molar ratio of R / (Co + Mo) was 4.8. After heating, the solution yield to solid was about 8.6%.

Separately, a solution containing 12.8 wt% AHM, 9.1 wt% Co Acetate, and 39.1 wt% glyoxylic acid was formed by mixing appropriate amounts of the 1 M Mo and Co solutions with a solution containing 50 wt% of glyoxylic acid. The molar ratio of R / (Co + Mo) was 4.8. After heating, the solution yield to solid was about 19.4%.

### Example 1C

This example is directed to the synthesis of bulk trimetallic NiCoMo. A bulk trimetallic NiCoMo catalyst was prepared by a controlled heating process according to the present disclosure. 200 mg NiO, 200 mg Co(OH)₂ and 1 g H₂MoO₄ were each dissolved/suspended in water in separate containers. A 50 wt.% glyoxylic acid solution was added to each container such that the concentration of acid in each container was 15 wt.%. The Ni, Co, and Mo solutions were combined and 6 ml 30% H₂O₂ added to the combined solution. The sample was heated at 250C for 4 hours to yield the bulk trimetallic NiCoMo catalyst precursor.

### Example 1D

Supported catalysts were prepared using commercially available alumina supports having the following properties:
(1) SC-1735: Davicat AL-2700, large pore alumina beads with particle diameters in the range of 1.2-2.4 mm, BET SA: 150 m²/g, Hg pore volume: 1.16 cc/g, median pore diameter by Hg: 299 Å, density: 0.45 g/cc, water pore volume: 1.14 cc/g, water pore volume per cc of support: 0.51 cc/cc.
(2) SC-1736: Davicat AL-2750, large pore alumina beads with particle diameters in the range of 2.4-4.8 mm, BET SA: 244 m²/g, Hg pore volume: 1.23 cc/g, median pore diameter by Hg: 162 Å, density: 0.43 g/cc, water pore volume: 1.22 cc/g, water pore volume per cc of support: 0.52 cc/cc.

The following procedure was used for impregnating the above alumina supports with a solution. Cobalt carbonate was mixed with citric acid in a citric acid to Co molar ratio of 1.2 and the aqueous mixture heated at 50°C until the cobalt carbonate dissolved. Ammonium heptamolybdate was added in an Mo/Co ratio of 2:1 to the resulting solution and stirred without further heating until the ammonium heptamolybdate dissolved. Additional citric acid was added to the resulting solution to adjust the citric acid : cobalt molar ratio to 1.8. Note that citric acid includes 3 -COOH functional groups. Thus, the molar ratio of -COOH functional groups to cobalt was 5.4, and the molar ratio -COOH functional groups to (Mo + Co) was 1.8. Ethylenediamine was slowly added to the solution with stirring until the ethylenediamine:Co ratio was 1.8 to form the impregnation solution.

Alumina support SC-1736 was impregnated with the impregnation solution at a ratio of 1.5 ml per gram of support. The impregnated support was heated under nitrogen flow at 110°C for 4 hr and at 375°C for 4 hr. The cooled support was impregnated in a second cycle with the same impregnation solution at a ratio of 1.34 ml per gram of support. The support was then heated under nitrogen flow at 110°C for 4 hr and at 375°C for 4 hr.

### Example 2 - Catalyst Precursor Characterization

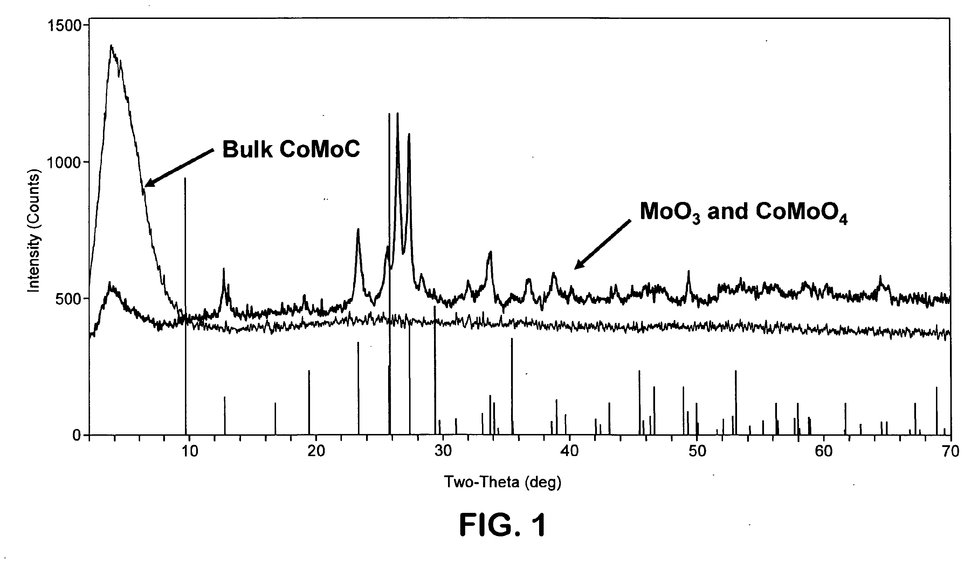

An X-ray Diffraction (XRD) analysis was performed on a CoMo based catalyst precursor synthesized according to an embodiment of the present disclosure. The resulting XRD spectrum is shown in Figure 1. As shown in Figure 1, the CoMo based catalyst precursor has an amorphous XRD spectrum. It is believed that the organic compound-based component in the CoMo catalyst precursor interrupts the crystallization process, resulting in a CoMo catalyst precursor that does not have a detectable crystalline phase. In an alternative embodiment of the present disclosure, a crystalline phase may be detectable in a catalyst precursor, but only as a portion of the catalyst precursor, resulting in XRD spectra with some crystalline character and some amorphous character. This is in contrast to the XRD spectrum of a bulk CoMo material (Comparative Catalyst 1) that was prepared without using an organic complexing agent, but that was otherwise prepared similarly to the catalyst precursors of the present disclosure. The XRD spectrum for the bulk comparative CoMo material shows a crystalline morphology, including peaks that appear to represent MoO₃ and CoMoO₄.

### Example 3 - Temperature Programmed Oxidation of Catalyst Precursor

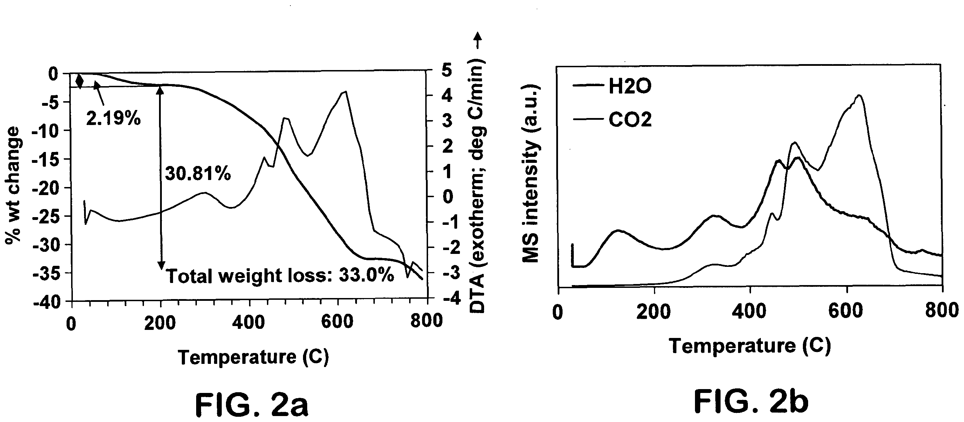

A temperature programmed oxidation (TPO) study was carried out to understand the nature of organic compound-based component of a catalyst precursor synthesized according to the procedure for Catalyst A in Example 1. Figure 2a shows that the catalyst precursor loses about 30 wt% of weight as the catalyst precursor is exposed to increasing temperatures up to 650°C. Figure 2b shows a mass spectrometry characterization of the products generated from the catalyst precursor sample as a function of temperature. The primary products generated during the TPO study were CO₂ and H₂O. Based on Figures 2a and 2b, it is believed that at 650°C all of the carbon has been removed from the catalyst precursor sample. The TPO study, in combination with the Temperature Programmed Reduction study described in Example 4, indicates that the organic compound-based component is composed of at least carbon, hydrogen, and oxygen.

### Example 4 - Temperature Programmed Reduction of Catalyst Precursor

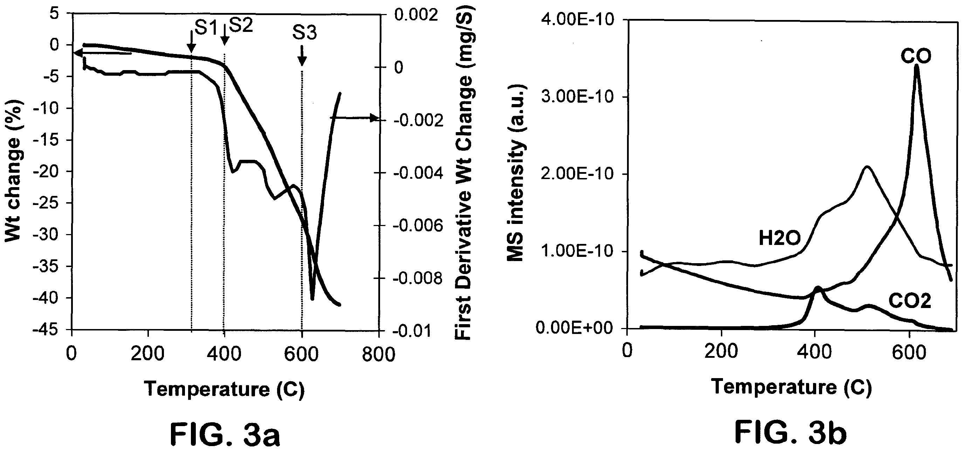

Figure 3 shows the results from a Temperature Programmed Reduction analysis (H₂-TPR) of a catalyst precursor synthesized according to the procedure for Catalyst Precursor A in Example 1. The H₂-TPR analysis was carried out in a 5% H₂/He atmosphere, with a temperature change rate of 10°C per minute. The results of the H₂-TPR study are shown in Figures 3a and 3b. Figure 3a shows the total weight loss as measured by thermo-gravimetric analysis. By the time the sample reached 700°C, almost 40% of the weight of the precursor sample was removed. As shown in Figure 3b, this weight loss was in the form of H₂O, CO₂, and CO released from the precursor sample. The species released from the sample are believed to represent removal of the organic compound-based component and/or conversion of some metal oxides into lower oxidation states.

Note also that Figures 2a, 2b, 3a, and 3b indicate that removal of the organic compound-based component is minimal until a temperature near 400°C is achieved. Based on this, it is preferred that sulfidation of catalyst precursors, which also occurs in a reducing environment, should take place at a temperature of less than 400°C, preferably less than 350°C. For example, one preferred sulfidation temperature is 325°C.

### Example 5 - Catalyst Characterization

A bulk catalyst precursor of this disclosure similar to Catalyst Precursor A was subjected to bulk sulfidation. A highly active material was obtained. Figure 4 shows X-ray Diffraction Pattern for the catalyst precursor as prepared, the corresponding catalyst after sulfidation, and a comparative spectrum of bulk MoS₂ made directly from AHM and H₂S. Figure 4 shows that the sulfided material is substantially amorphous and/or includes only small particles relative to the resolution of XRD, as compared to the distinctive diffraction peaks of the bulk MoS₂. This is consistent with TEM micrographs of the sulfided catalyst, which showed small crystal sizes. It is believed that these small crystals represent metal sulfides, possibly also including metal carbosulfides. In an alternative embodiment, at least a portion of a sulfided catalyst according to the present disclosure can have crystalline character that is detectable by XRD. In such an embodiment, the resulting XRD spectra may have some crystalline character and some amorphous character.

### Example 6 - Sulfidation of Catalyst Precursors

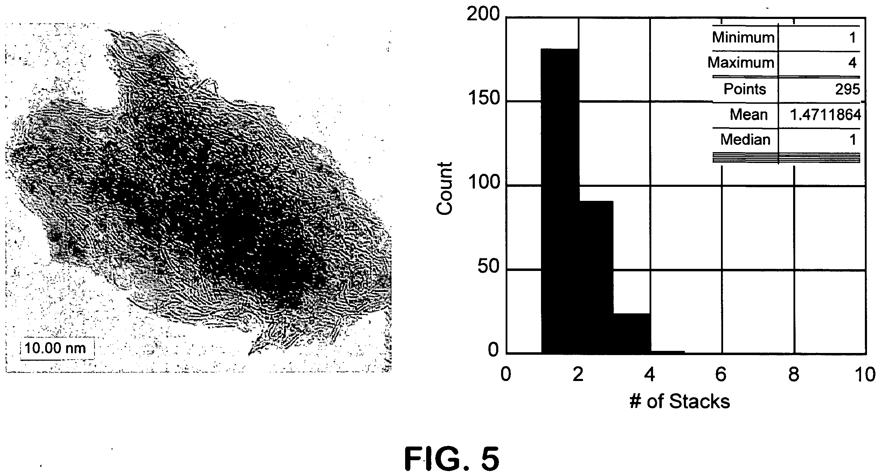

The procedure of Example 1 was followed to generate a catalyst precursor similar to Catalyst Precursor A. This catalyst precursor was then sulfided by a liquid phase sulfidation procedure according to an embodiment of the present disclosure. Figure 5 provides a TEM micrograph and stack height analysis for the resulting sulfided catalyst. The TEM data shows an average stack height for MoS₂ stacks in the sulfided catalyst of about 1.5.

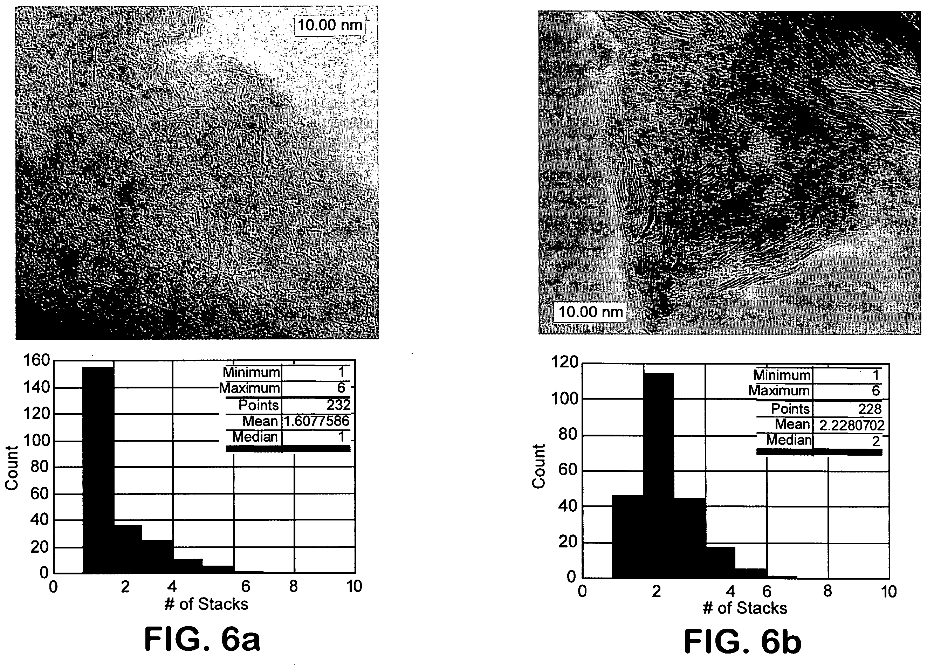

Figures 6a and 6b depict TEM data for two additional types of sulfided catalysts. The catalysts corresponding to Figures 6a and 6b were prepared using gas phase sulfidation processes to sulfide catalyst precursors prepared in a manner similar to Catalyst Precursor A. The catalyst corresponding to Figure 6a was prepared by sulfiding a catalyst precursor in 10% H₂S/H₂ at 232°C for 18 hours, followed by sulfiding at 321°C for an additional 12 hours. The catalyst corresponding to Figure 6b was sulfided in 10% H₂S/H₂ at 600°C for 4 hours.

The TEM data for the gas phase sulfided catalysts show an average measured stack height of 1.6 for the catalyst in Figure 6a and 2.2 for the catalyst in Figure 6b. Additionally, the gas phase sulfided catalysts shown in Figures 6a and 6b appear to be less homogenous than the sample shown in Figure 5. This effect is more noticeable for the catalyst in Figure 6b, which was sulfided at a higher temperature.

### Example 7 - Temperature Programmed Oxidation of Sulfided Catalyst

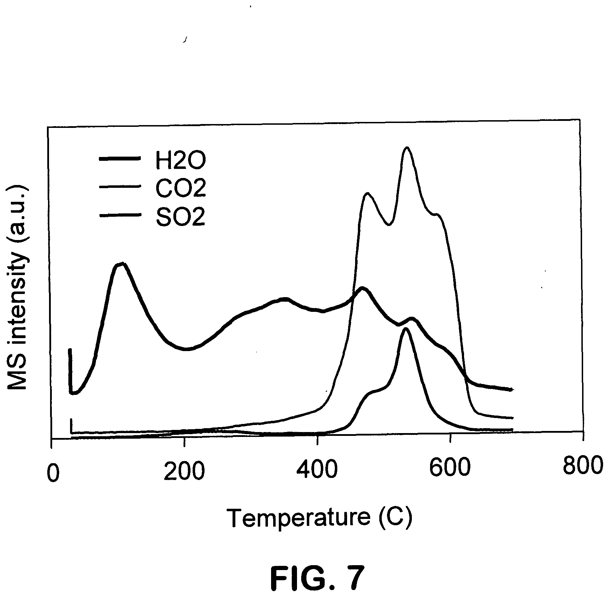

Figure 7 depicts results from a TPO study of a sulfided catalyst prepared according to an embodiment of the present disclosure. The sulfided catalyst was prepared by liquid phase sulfidation of a catalyst precursor similar to Catalyst Precursor A. Note that the CO₂ and SO₂ peaks are both in the temperature range of 400 - 600°C. Without being bound by any particular theory, in this temperature range it is believed that the bulk CoMoS₂ converts exothermically to Co oxide and Mo oxide with evolution of SO₂. The evolution of CO₂ in the same temperature window as SO₂ is consistent with the formation of a carbosulfide phase (such as CoMoSₓC_{y}) where the carbon is structurally part of the sulfide phase. Note also that H₂O is released at high temperature and may be associated either with remaining portions of the organic compound-based component or surface SH groups.

### Example 8 - Heating Step Variations

Catalyst precursors were prepared similar to Catalyst Precursor A except that different heating steps were performed on four different samples in four different atmospheres - air, nitrogen, hybrid (mixture of air and nitrogen), and without air-flow (statically heated). In the hybrid atmosphere heating, the furnace was ramped in a nitrogen atmosphere from about room temperature to about 325°C in one hour and held at 325°C under nitrogen for 2 additional hours, then the atmosphere was gradually switched to air in a period of about 2 hours. The final treatment was carried out in air at 325°C for two hours. The surface area and carbon content was measured for each sample and the results are presented in Table 3 below.

**Table 3**

| **Surface Areas and C-Contents of Bulk CoMo Catalyst Precursors** | | |
|---|---|---|
| CoMo-Glyoxylic Acid Catalysts | BET SA (m²/g) | C Content (wt%) |
| Air heating at 617°F | 9.7 | 22.0 |
| Hybrid heating at 617°F | <0.5 | 22.8 |
| N₂ heating at 617°F | 0.7 | 22.7 |
| Statically heating at 617°F | 0.8 | 22.0 |

It can be seen from Table 3 above that the bulk CoMo catalyst precursors have relatively low surface areas. Except for the bulk CoMo catalyst precursor heated in air, which has less than 10 m²/g surface area, the other catalyst precursors have surface area less than 1 m²/g. After heating in air, and /or nitrogen, and /or hybrid (a mixture of air and N₂), and/ or without air-flow (static atmosphere), all catalyst precursors contain substantial amounts of carbon, about 22 to 23 wt%.

### Example 9 - Hydrodesulfurization and Hydrodenitrogenation

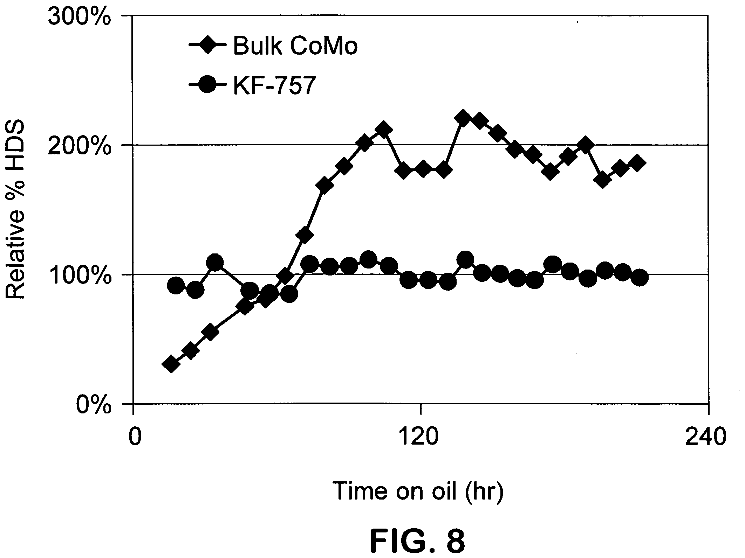

Figure 8 shows the relative hydrodesulfurization activity of a CoMo catalyst prepared according to an embodiment of the present disclosure and a commercially available catalyst. The commercially available catalyst is a Ketjenfine® 757 (KF-757™) catalyst available from Albemarle Catalysts Company LP of Houston, TX. The KF-757™ catalyst is composed of Co and Mo on an alumina support. The disclosed CoMo catalyst was prepared by sulfiding a catalyst precursor prepared by a method similar to the method for Catalyst Precursor A. However, the catalyst precursor used for this example was heated at 325°C in the presence of nitrogen, rather than air. The hydrodesulfurization process corresponding to the data in Figure 8 was performed at a pressure of 220 psig. As shown in Figure 8, the relative activity of the inventive bulk metallic catalyst is roughly twice the activity of the KF-757™ catalyst.

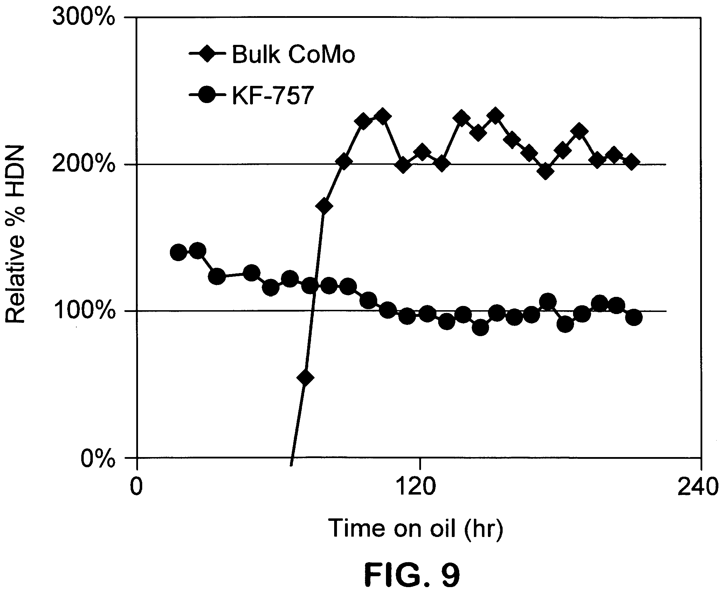

Figure 9 shows a similar comparison of the disclosed catalyst and KF-757™ for hydrodenitrogenation activity. The catalyst according to the present disclosure also shows twice the activity for hydrodenitrogenation as compared to KF-757™. The process corresponding to Figure 9 was also performed at 220 psig.

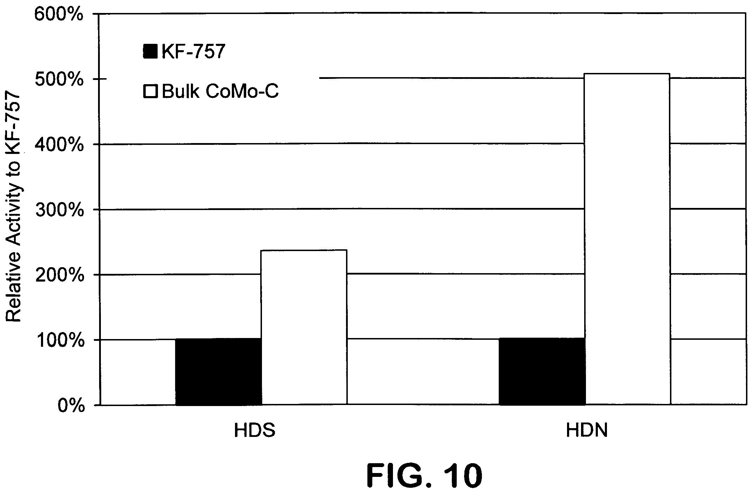

Figure 10 shows a comparison of both hydrodesulfurization and hydrodenitrogenation activity for the disclosed catalyst and KF-757™ for a hydrotreatment process performed at 500 psig. As shown in Figure 10, at this higher pressure the catalyst according to an embodiment of the present disclosure shows a similar activity credit for hydrodesulfurization at 500 psig as compared to KF-757™, and also shows 5 times the activity for hydrodenitrogenation at 500 psig.

In a further example, the relative activity at low H₂ pressure was determined for a catalyst according to the present disclosure (corresponding to Catalyst A in Example 1) versus KF-757™. A hydrotreated feedstock was treated in a three phase reactor at 329°C, 200 psig H₂, and 700 SCF/B of H₂. The properties of the initial hydrotreated feedstock and treated feedstocks are provided in Table 4 below.

**Table 4**

| | Feed | KF-757™ | Bulk CoMo-C |
|---|---|---|---|
| S, ppm | 4500 | 55 | 16 |
| N, ppm | 39 | 17 | 7 |
| API | 37.9 | 38.1 | 38.2 |
| Arom% | 25.7 | 24.8 | 25.2 |

As shown in Table 4, the catalyst according to the present disclosure exhibits higher HDS and HDN activity while reducing the amount of aromatic saturation. Again, the reduced aromatic saturation is a beneficial trait from the standpoint of reducing overall hydrogen consumption during hydrotreating.

The same types of catalysts were also compared for hydrotreatment at medium pressure. A virgin feedstock with a T95 value of 773°F (412°C) was treated in a three phase reactor at 329°C, 500 psig H₂, and 700 SCF/B H₂. Additional details regarding the initial feedstock and the treated feedstocks are provided in Table 5 below.

**Table 5**

| | Feed | KF-757™ | Bulk CoMo-C |
|---|---|---|---|
| S, ppm | 18600 | 1420 | 190 |
| N, ppm | 167 | 60 | <2 |
| API | 32.2 | 35.4 | 36.4 |
| Aromatics, wt% | 32.8 | 26.7 | 24.0 |
| 1 ring | 15.4 | 21.4 | 20.2 |
| 2 ring | 7.7 | 3.5 | 3.0 |
| 3+ ring | 8.7 | 1.8 | 0.8 |

As shown in Table 5, the catalyst according to the present disclosure showed higher HDS and HDN activity than the commercial catalyst, with only a modest increase in hydrogen consumption.

### Example 10

This example is directed to the catalyst testing protocol. A catalyst was prepared by a double impregnation of support SC 1735 with a solution containing Co, Mo, citric acid (citric acid:Co molar ratio of 1.8) and ethylene glycol (ethylene glycol:citric acid molar ratio of 1.8). The impregnated support contained 442 mg MoO₃ and 115.1 mg CoO per 1 ml of support after calcining at 375°C under nitrogen. The calcined support was sulfided in situ at 500 psi (3448 kPa) and a treat gas rate of 700 Scf/B (125 m³/m³), and tested for HDS activity in a micro fixed-bed reactor with the catalyst loading of 1.0 cc. In comparison, the commercially available Ketjenfine® 757 (KF-757) was evaluated in a parallel reactor under the same condition. After an in-situ sulfiding step, the catalysts were subjected to a virgin distillate feed (Feed #1 in Table 1) at a temperature of 625°F, a total of 500 psig pressure, and a hydrogen gas treat rate of 700 SCF/B. After 144 hr of running on feed, the catalyst HDS activity (volumetric) was 225% of the commercially available catalyst (KF-757) run under the same conditions on the basis of 1.5 order kinetics.

The test feed was then changed to another distillate feed (Feed #2 in Table 6), and the test condition was changed to these lower pressure conditions: a total pressure of 220 psig, 625°F, and a hydrogen gas treat rate of 700 SCF/B. Catalyst activity was 135% when compared to KF-757 under the same conditions.

**Table 6. Hydrocarbon feedstock used to compare catalyst hydrodesulfurization and hydrodenitrogenation.**

| | **Sulfur, wt%** | **Nitrogen, ppm** | **API** | **Aromatics, wt%** | **T95, °F** |
|---|---|---|---|---|---|
| Feed #1 | 1.86 | 167 | 32.2 | 32.8 | 773 |
| Feed #2 | 0.45 | 39 | 37.9 | 25.7 | 670 |

### Example 11 - Heavy Oil Hydroprocessing

A vacuum gas oil was hydroprocessed using a series of catalysts according to the present disclosure and a commercial catalyst, in order to determine the suitability of the disclosed catalyst for hydroprocessing of lube oil or fuel oil boiling range feeds. The vacuum gas oil feed had a sulfur content of 2.3 wt% and nitrogen content of 2800 wppm.

The vacuum gas oil feed was hydroprocessed using three catalysts according to the present disclosure and a comparative commercial catalyst. The catalysts according to the present disclosure contained cobalt and molybdenum, and were generally prepared according to the method described in Example 1, followed by a bulk sulfidation. CoMo catalyst #1 was prepared using oxalacetic acid, with a ratio of oxalacetic acid to (Co + Mo) of 2.5 to 1. CoMo catalyst #2 was prepared using glyoxylic acid, with a ratio of glyoxylic acid to (Co + Mo) of 6.0 to 1. CoMo catalyst #2 was prepared using glyoxylic acid, with a ratio of glyoxylic acid to (Co + Mo) of 4.8 to 1. The commercially available catalyst was KF-757, available from Albemarle Catalyst Company. For all of the tests, the vacuum gas oil was hydroprocessed at 675°F (357°C) and at a pressure of 600 psig.

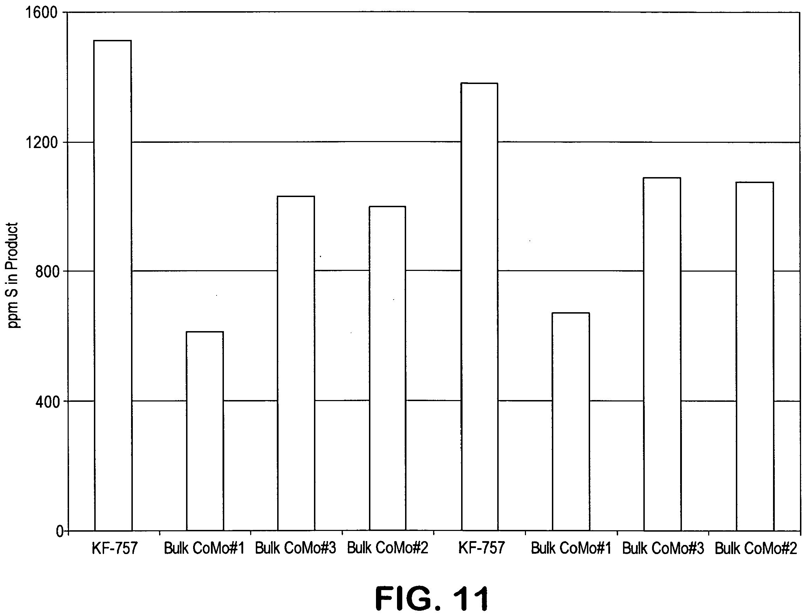

Figures 11 - 12 show the results for sulfur and nitrogen removal, respectively, with each catalyst. Note that two samples of each catalyst were used. Figure 11 shows the sulfur removal results. As shown in Figure 11, the catalysts according to the present disclosure provide a noticeable improvement in the amount of sulfur removed. The commercially available catalyst reduced the sulfur level of the feedstock from the initial level of 2.3 wt% to an amount between 1200 and 1500 wppm. By contrast, the catalysts according to the present disclosure reduced the sulfur levels in the product to levels of 1000 wppm or less. In particular, CoMo catalyst #1 reduced the sulfur content in the product to below 800 wppm.

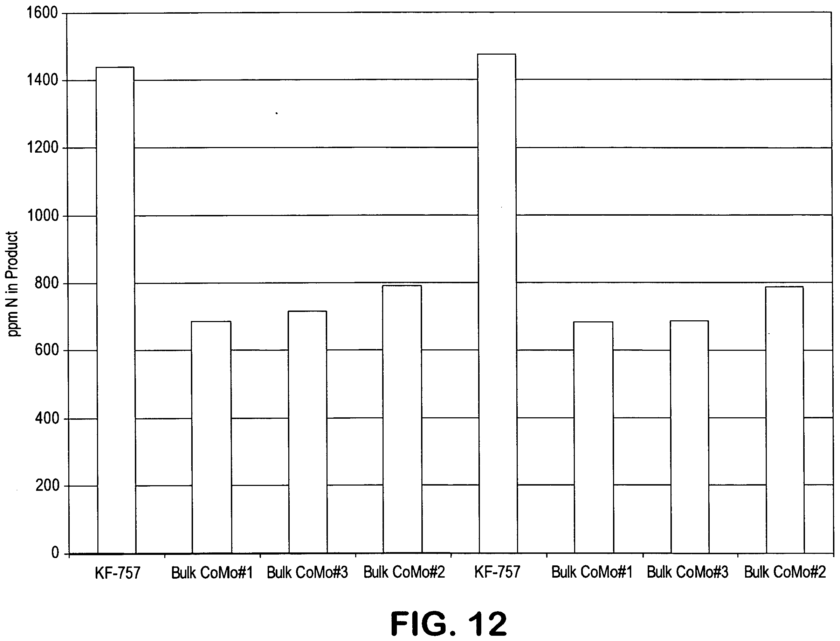

Figure 12 shows similar increased effectiveness for catalysts according to the present disclosure for nitrogen removal. The commercially available catalyst reduced the nitrogen content of the feedstock by 50%, from around 2800 wppm to an amount above 1400 wppm. The catalysts according to the present disclosure provided greater levels of denitrogenation. Each of the catalysts according to the present disclosure reduced the product nitrogen levels to 800 wppm or less. Thus, the catalysts according to the present disclosure provide improved hydrodesulfurization and hydrodenitrogenation activity at similar process conditions.

### Example 12 - Aromatic Selectivity

4,6-diethyldibenzothiophene (DEDBT) is a model compound that can be used to investigate selectivity for preserving aromatics during hydrodesulfurization. When 4,6 DEDBT is hydrodesulfurized, two primary products are formed:

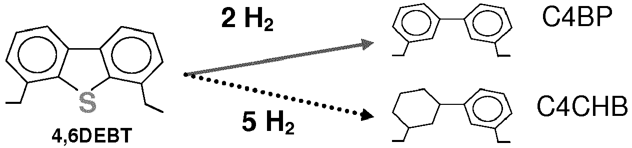

The C4CHB product requires substantially more H₂ to form, and therefore is less desirable from a processing standpoint. A catalyst that favors formation of the C4BP compound over the C4CHB compound is preferable. The selectivity of a catalyst can be expressed in terms of the ratio between the wt% of C4CHB and the wt% of C4BP.

A model compound study was performed to investigate the relative aromatic selectivity of catalysts made according to the present disclosure versus a commercial catalyst. A dodecane model feedstock was spiked with 1.5 wt% of 4,6 diethyldibenzothiophene (4,6 DEDBT). The feedstock was treated in a three phase reactor at 265°C, 250 psig of H₂ and an H₂ flow rate of 650 SCF/B. The feedstock was treated in the presence of a catalyst corresponding to Catalyst A in Example 1, and separately in the presence of KF-757™, a commercially available catalyst made by Albemarle Catalyst Company. The feed and products were analyzed using GC-Mass Spectrometry. The feedstock treated according to the invention had a C4CHB/C4BP ratio of 9, while the feedstock treated with the KF-757™ had a ratio of 25. This demonstrates that the catalyst according to the present disclosure provided a better relative activity for the reaction pathway leading to direct desulfurization (i.e., formation of C4BP). By preferentially using the reaction pathway leading to direct desulfurization, the catalyst according to the present disclosure reduces the hydrogen consumption required for desulfurization. As a result, the catalyst according to the present disclosure is beneficial for hydroprocessing methods where aromatic saturation is not desirable and/or is not a requirement for the eventual product.

### Example 13 - Hydroprocessing with Bulk Metallic Catalysts

The following figures schematically show various process schemes in which the bulk metallic catalysts of the present disclosure can be used. Although multiple reactors and catalyst zones are presented in these figures, it will be understood that at least one reactor or catalyst zone contains a bulk metallic catalyst according to the present disclosure. The reactor, catalyst bed, or zone that the bulk metallic catalyst is used in, and the combination or sequence of the bulk metallic catalyst with one or more additional catalysts will depend on such things as the nature of the feedstream to be treated and the desired level and type of upgrading. Multiple reaction stages and multiple catalysts may be preferred in some instances. For example, when the desired product is a naphtha or distillate transportation fuel, a significant amount of sulfur and nitrogen will have to be removed from the starting naphtha or distillate boiling range feedstream. Further, distillates containing paraffins, especially linear, mono-branched, or di-branched paraffins, are often preferred over naphthenes, which are often preferred over aromatics. To achieve this, at least one downstream catalyst in a multistage process will be selected from the group consisting of hydrotreating catalysts, hydrocracking catalysts, aromatic saturation catalysts, isomerization catalysts, and ring-opening catalysts. If it is economically feasible to produce a product stream having a high level of paraffins, then the downstream reaction stages can preferably include one or more aromatic saturation zone, isomerization zone, ring-opening zone, or a combination thereof.

If the feedstream is a lube boiling range stream, a heavy diesel, or a winter diesel then it is preferred that at least one of the catalyst beds be comprised of a dewaxing or isomerization catalyst and at least one of the catalyst beds be comprised of a bulk metallic catalyst of this disclosure. Further, if the feedstream is a heavy feed, such as a resid or a gas oil, then it is preferred the first upstream catalyst bed be comprised of a hydrodemetallation catalyst and at least one other catalyst bed be comprised of a bulk metallic catalyst according to the present disclosure.

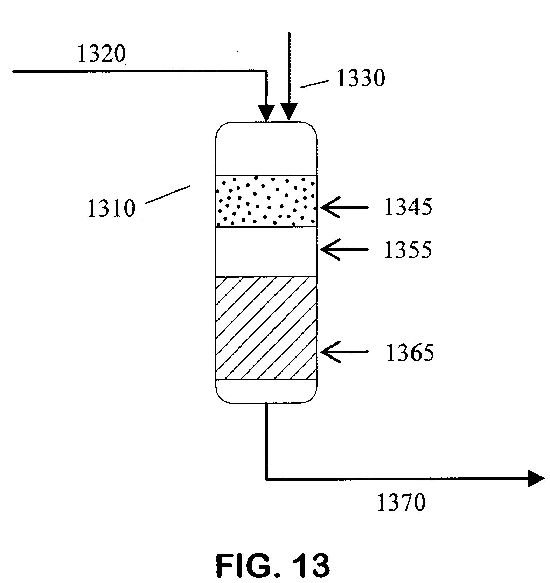

Reference is now made to Figure 13 hereof which shows a reactor **1310** containing at least two beds of catalyst. The first bed, which is the upstream bed with respect to the flow of feed, is designated **1345.** The next downstream bed, which is optional, is designated **1355.** The farthest downstream bed is designated **1365.** It will be understood that middle bed **1355** is an optional catalyst bed and may be in place of a bed of catalyst, or it can be absent and/or be a non-reaction zone that contains no catalyst.

As previously mentioned, at least one of the catalyst beds will be comprised of the bulk bimetallic catalyst of the present disclosure. For example, the bulk bimetallic catalyst can be included in upper most upstream bed **1345,** middle catalyst bed **1355,** downstream catalyst bed **1365,** or any two of these three catalyst beds. The third catalyst bed, if used, can have any other catalyst suitable for the predetermined function of that bed. In several preferred embodiments represented by Figure 12, when the feed is a distillate feed, the bulk metallic catalyst of the present disclosure comprises catalyst bed **1345** while one or both of catalyst beds **1355** and **1365** are comprised of a conventional hydrotreating catalyst. The terms "hydrotreating", "hydrodesulfurization", and "hydrodenitrogenation" are sometimes used interchangeably herein. One reason why it is preferred to have the bulk metallic catalyst of the present disclosure in the downstream catalyst bed is because the bottom of a hydrotreating reactor is typically at a higher temperature than the upper sections of the reactor. It is preferred to have the most active catalyst, that being a bulk metallic catalyst of this disclosure, in the hotter section of the reactor to maximize the activity increase at these higher reactor temperatures. Another preferred process according to Figure 13 is that a conventional hydrotreating catalyst be used in catalyst bed **1345,** a bulk metallic catalyst of the present disclosure used in middle bed **1355,** and an aromatics saturation, dewaxing, isomerization, and/or ring opening catalyst used in downstream bed **1365.** If a conventional hydrotreating catalysts is not used, the bulk metallic catalyst may be in the upstream bed **1345** and optional middle bed **1355,** followed by an aromatics saturation, dewaxing, isomerization catalyst and/or ring opening catalyst used in downstream bed **1365.** The bulk metallic catalyst may be placed solely in upstream bed **1345** followed by an aromatics saturation, dewaxing, isomerization, and/or ring opening catalyst used in optional middle bed **1355** and downstream bed **1365.**

The embodiment depicted in Figure 13 can be practiced by conducting, via line **1320,** the feedstream to be treated into the top of reactor **1310** along with a hydrogen-containing treat gas via line **1330.** As previously mentioned, the preferred feed is a sulfur-containing distillate feed. For purposes of this disclosure, the term "hydrogen-containing treat gas" means a treat gas stream containing at least an effective amount of hydrogen for the intended reaction. The treat gas will preferably contain at least 50 vol.%, more preferably at least 75 vol.% hydrogen. The feedstream and treat gas stream pass cocurrently through upstream catalyst bed **1345** wherein the reaction (hydrodesulfurization in the case of naphtha and distillate feeds) takes place in accordance with the catalyst selected for upstream catalyst bed **1345.** The resulting reaction products flow downward and through optional catalyst bed **1355** and downstream catalyst bed **1365** where the predetermined reactions in each bed takes place. The product stream exits the reactor via line **1370.** It is within the scope of the embodiment depicted in Figure 13 that the product stream contain both normally liquid phase products and normally vapor phase products. The vapor phase products can be separated from the liquid phase products in a downstream separation zone (not shown). In another embodiment, the treat gas, instead of being fed cocurrent with the feedstream can be introduced at the bottom of the reactor a passed countercurrent to the down-flowing feedstream. In such a case, the downstream catalyst bed **1365** can contain a more sulfur sensitive catalyst because the upflowing treat gas will carry sulfur moieties, such as H₂S upward and out of the reactor and not through downstream catalyst bed **1365.**

The liquid phase product will typically be the higher boiling point components of the feed. The vapor phase will typically be a mixture of hydrogen-containing treat gas, heteroatom impurities, such as H₂S and NH₃, and vaporized lower-boiling components of the fresh feed, as well as light products of hydroprocessing reactions. If the vapor phase effluent still requires further hydroprocessing, it can be passed to a vapor phase reaction zone (not shown) containing additional hydroprocessing catalyst and subjected to suitable hydroprocessing conditions for further reaction. In another embodiment, a feedstock which already contains adequately low levels of heteroatoms can be fed directly into the reactor for aromatic saturation and/or cracking. If a preprocessing step is performed to reduce the level of heteroatoms, the vapor and liquid phase can be disengaged and the liquid effluent directed to the appropriate reaction stage. The vapor from the preprocessing step can be processed separately or combined with the vapor phase product from the reaction vessel.

In an embodiment where one of the downstream reaction stages is a hydrocracking stage, the catalyst can be any suitable conventional hydrocracking catalyst run at typical hydrocracking conditions. Typical hydrocracking catalysts are described, for example, in US Patent No. 4,921,595 to UOP. Such catalysts are typically comprised of a Group VIII metal hydrogenating component on a zeolite cracking base. The zeolite cracking bases are sometimes referred to in the art as molecular sieves, and are generally composed of silica, alumina, and one or more exchangeable cations such as sodium, magnesium, calcium, rare earth metals, etc. They are further characterized by crystal pores of relatively uniform diameter between 4 and 12 Angstroms. It is preferred to use zeolites having a relatively high silica/alumina mole ratio greater than 3, preferably greater than 6. Suitable zeolites found in nature include mordenite, clinoptiliolite, ferrierite, dachiardite, chabazite, erionite, and faujasite. Suitable synthetic zeolites include the Beta, X, Y, and L crystal types, e.g., synthetic faujasite, mordenite, ZSM-5, MCM-22 and the larger pore varieties of the ZSM and MCM series. A particularly preferred zeolite is any member of the faujasite family, see Tracy et al. Procedures. of the Royal Society., 1996, Vol. 452, p813. It is to be understood that these zeolites may include demetallated zeolites which are understood to include significant pore volume in the mesopore range, i.e., 20 to 500 Angstroms. Non-limiting examples of Group VIII metals which may be used on the hydrocracking catalysts include iron, cobalt, nickel, ruthenium, rhodium, palladium, osmium, iridium, and platinum. Preferred are platinum and palladium, with platinum being more preferred. The amount of Group VIII metal will range from 0.05 wt.% to 30 wt.%, based on the total weight of the catalyst. If the metal is a Group VIII noble metal, it is preferred to use 0.05 to 2 wt.%. Hydrocracking conditions include temperatures from 200° to 425°C, preferably from 220° to 330°C, more preferably from 245° to 315°C; pressure of 200 psig to 3,000 psig; and liquid hourly space velocity from 0.5 to 10 V/V/Hr, preferably from 1 to 5 V/V/Hr.

Non-limiting examples of aromatic hydrogenation catalysts include nickel, cobalt-molybdenum, nickel-molybdenum, and nickel-tungsten. Noble metal containing catalysts can also be used. Non-limiting examples of noble metal catalysts include those based on platinum and/or palladium, which is preferably supported on a suitable support material, typically a refractory oxide material such as alumina, silica, alumina-silica, kieselguhr, diatomaceous earth, magnesia, and zirconia. Zeolitic supports can also be used. Such catalysts are typically susceptible to sulfur and nitrogen poisoning. The aromatic saturation zone is preferably operated at a temperature from 40°C to 400°C, more preferably from 260°C to 350°C, at a pressure from 100 psig to 3,000 psig, preferably from 200 psig to 1,200 psig, and at a liquid hourly space velocity (LHSV) of from 0.3 V/V/Hr. to 2 V/V/Hr.

Suitable ring opening catalysts for use in the present invention are those catalyst that catalyze the opening of 5 and 6-membered naphthenic rings typically found in distillate feedstreams. The preferred ring opening catalysts are those that are capable of opening these 5 and 6-membered rings without substantial dealkylation of ring substituents. In cases where 6-membered rings are predominant with respect to 5-membered rings it may be necessary to treat the feedstream with an isomerization catalyst to convert the 6-membered ring compounds to 5-membered ring compounds prior to opening. Non-limiting examples of ring opening catalysts suitable for use in this invention are those that contain both a metal function and an isomerization function. The metal function is provided by an effective amount of a metal selected from Ir, Ru, Rh, and mixtures thereof, preferably Ir, and Ru, and more preferably Ir; and the isomerization function is provided by an effective amount of acidic isomerization function that will cause isomerization of C₆ naphthenic rings to C₅ naphthenic rings, but not cause excessive cleavage of substituents on the ring. An effective amount of metal would be that amount required to effect ring opening of C₆ and C₅ naphthenic rings. Typically, such an effective amount of metal would be up to 10 wt.%, based on the total weight of the catalyst. Preferably the amount of metal will be from 0.01 wt.% to 5 wt.%, more preferably from 0.02 wt.% to 3 wt.%, and most preferably from 0.1 wt.% to 1 wt.%. An effective amount of acid function would be that amount needed to cause isomerization of C₆ naphthenic rings to C₅ naphthenic rings, but not so much as to cause excessive cleavage of substituents from the ring and secondary cracking. The precise amount of acidity to balance isomerization versus cleavage of ring substituents depends on many factors, such as the molecular make-up of the feed, the process conditions, and the particular catalyst employed.

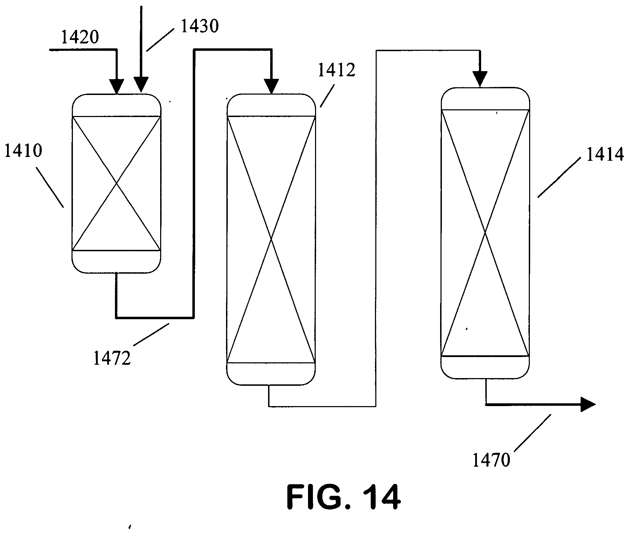

Figure 14 hereof schematically shows another preferred multi-stage process of the present disclosure. This figure shows a first stage reactor **141-,** a second stage reactor **1412** and an optional third stage reactor **1414.** Each reactor can be operated at the same or different operating conditions including temperature and pressure depending on the feed and the intended reactions in each reactor. At least one of the reactors will contain a catalyst bed comprised of the bulk metallic catalyst of the present disclosure. For example, the bulk metallic catalyst can be contained in reactor **1410, 1412,** or **1414** or in any two of these reactors. In a preferred embodiment represented by Figure 14, third reactor **1414** is not used, the feedstream is a distillate feedstream, and the bulk metallic catalyst of the present disclosure is contained in reactor **1410** with **1412** containing a catalyst selected from conventional hydrotreating catalysts, hydrocracking catalysts, dewaxing catalysts, isomerization catalysts, ring opening catalysts and aromatic saturation catalysts.

In other preferred embodiments represented by Figure 14 the bulk metallic catalyst of the present disclosure is contained in downstream reactor **1414** with one or both of reactors **1410** and **1412** containing a catalyst selected form conventional hydrotreating catalysts. Middle reactor **1412** can contain the bulk bimetallic catalyst of the present disclosure with upstream reactor **1410** containing a conventional hydrotreating catalyst and downstream reactor **1414** can comprise a catalyst selected from conventional hydrotreating catalysts, hydrocracking catalysts, dewaxing catalysts, isomerization catalysts, ring opening catalysts and/or aromatic saturation catalysts.

If the reactions of interest are HDS and/or HDN and only reactors **1410** and **1412** are present, then it is preferred that the highest temperature reactor contain the bulk metallic catalyst of the present disclosure. Also, if either reactor contains more than one bed of catalyst it is preferred that the second bed be the bulk metallic catalyst of the present disclosure and the first bed be a conventional hydrotreating catalyst.

Sulfur-containing feedstream, preferably a distillate boiling range streams, are upgraded in the process scheme of Figure 14 hereof by being introduced, via line **1420** into reactor **1410** along with a hydrogen-containing treat gas **1430** thereby resulting in an intermediate product stream **1472** having a reduced level of sulfur. This intermediate product stream **1472** in its entirety can be conducted to reactor **1412** or it can be subjected to interstage stripping (not shown) wherein sulfur moieties, such as H₂S are stripped using a stripping agent, such as steam or a basic material. In one embodiment, intermediate product stream **1472** is introduced directly into second stage reactor **1412** containing at least one bed of catalyst thereby resulting in a product stream **1470** containing reduced levels of sulfur, when compared to the feed. The advantage of multiple reactors is that each one can be operated at operating conditions independent of the other reactors.

It will be understood that the hydrogen-containing treat gas can be introduced into the process scheme of Figure 14 at any suitable location and can flow either cocurrent or countercurrent with respect to the feedstream. For example, hydrogen-containing treat gas can also be introduced into reactor **1412** and/or **1414,** if used, cocurrent with the feedstream. It can also be introduced countercurrent to the feedstream in any one or more of reactors **1410, 1412** and **1414.** Hydrogen-containing treat gas can also be cascaded from one reactor to the next downstream reactor cocurrent with the flow of feed or it can be recycled back to any one or more preceding reactors from any one or more downstream reactors.

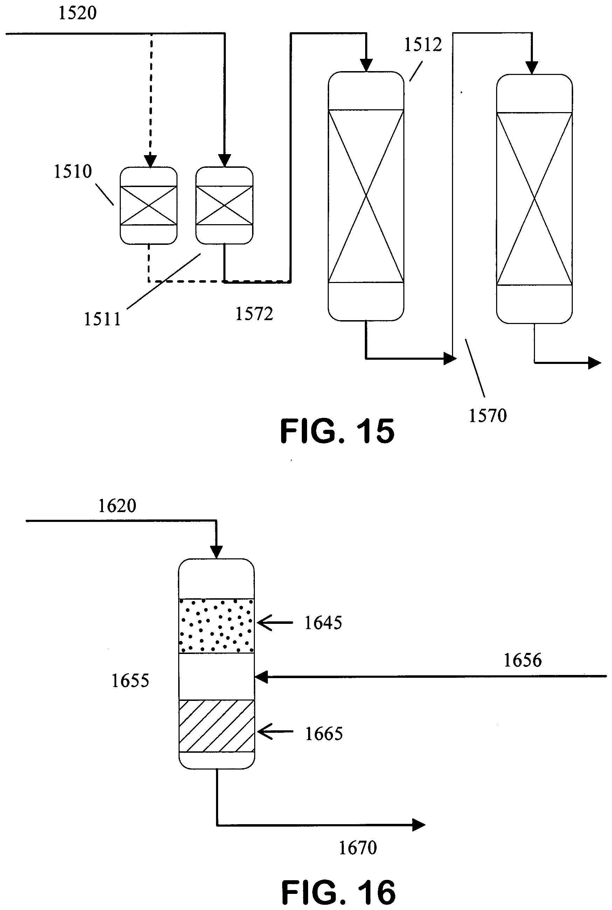

Figure 15 schematically shows an embodiment of the disclosure that includes a two-stage process with the first stage being comprised of a swing reactor system. That is, the first stage is comprised of reactors **1510** and **1511** wherein only one reactor is on-line while the other is off line and its catalyst being regenerated or changed-out. That is, when the catalyst of one reactor loses activity to a predetermined point (spent) the reactor containing that catalyst is swung off-line for regeneration or replacement and the other reactor, which contain fresh or regenerated catalyst is brought on-line. Reactor **1512** and reactors **1510** and **1511** can contain the combination and sequence of catalysts as described for Figures 13 and 14 hereof. Feed **1520,** intermediate product stream **1572** and product stream **1570** are as discussed above. The criteria with respect to feed and matching catalysts are the same for this Figure 15 process scheme as it is for the process schemes of Figures 13 and 14.

Figure 16 hereof is another type of single stage hydrotreating process containing an upstream catalyst bed **1645** of bulk metallic catalyst of this disclosure and a downstream bed **1665** of conventional hydrotreating catalyst. There if provided a quench zone **1655** wherein a lower temperature quench gas **1656** is used to lower the temperature of the product stream passing from upstream catalyst bed **1645** to downstream catalyst bed **1665.** The criteria with respect to feed **1620,** product **1670,** and matching catalysts are also the same for the Figure 16 process scheme as it is for the process schemes of Figures 13 and 14.

## Claims

1. A method for hydroprocessing a feedstock, comprising:
providing a reaction system with multiple catalyst stages, including at least one stage containing a bulk metallic catalyst formed by sulfidation of a precursor composition comprising a Group VIII metal, a Group VIB metal, and from 10 wt.% to 60 wt.% of an organic compound-based component derived from an organic complexing agent that is an organic acid that contains a -COOH functional group and at least one additional functional group selected from carboxylic acid -COOH, hydroxamic acid -NOH-C=O, hydroxo -OH, keto -C=O, amine -NH2, amide: -CO-NH2, imine : -CNOH, epoxy: =COC=, or thiol: -SH, the catalyst precursor composition having a surface area of 16 m²/g or less measured by Brunauer-Ernett-Teller (BET) method, the carbon content of the catalyst after sulfidation being at least 10 wt%, and at least one additional catalyst stage containing a different catalyst;
and further comprising
a. conducting a hydrocarbon feedstock through the at least one stage containing the catalyst formed from the precursor composition at hydrotreatment conditions, and conducting at least a portion of the hydrotreated feedstock through the at least one additional stage at second hydroprocessing conditions; or
b. conducting a hydrocarbon feedstock through the at least one additional stage containing the additional hydrotreatment catalyst at additional hydrotreatment conditions, and conducting at least a portion of the hydrotreated feedstock through the at least one stage containing a catalyst formed from the precursor composition at hydrotreatment conditions.

2. The method of claim 1, wherein the Group VIII metal is nickel or cobalt, and the Group VIB metal is molybdenum or tungsten.

3. The method of claim 1, wherein the catalyst formed from the precursor composition is a bulk metallic catalyst formed from a catalyst precursor composition having a surface area of less than 10 m²/g.

4. The method of claim 1, wherein the catalyst formed from the precursor composition further comprises a transition metal different from the Group VIB metal and the Group VIII metal.

5. The method of claim 1, wherein hydrotreatment conditions include a temperature of from 250° to 450°C, hydrogen pressure of from 5 to 250 bar, liquid hourly space velocities of from 0.1 to 10 h⁻¹, and hydrogen treat gas rates of from 90 to 1780 m³/m³ (500 to 10000 SCF/B).

6. The method of claim 1 wherein the hydrocarbon feedstock is a distillate having a boiling range from 290°C to 600°C and contains at least 10 wppm nitrogen and a sulfur content ranging from 0.1 wt.% to 3 wt.%.

7. The method of claim 6 wherein the hydroprocessing is selected from the group consisting of hydrogenation of unsaturates, hydrodearomatization, catalytic dewaxing, hydroisomerization, and ring opening.

8. The method of claim 6, wherein the hydroprocessing is hydrogenation of unsaturates or hydrodearomatization and the hydroprocessing conditions include a temperature from 40°C to 400°C, a pressure from 100 psig to 3,000 psig, and a liquid hourly space velocity (LHSV) of from 0.3 V/V/Hr. to 2 V/V/Hr.

9. The method of claim 6, wherein the hydroprocessing is catalytic dewaxing or hydroisomerization and the hydroprocessing conditions include a temperature from 200°C to 500°C, a pressure from 50 psig to 3,000 psig, and a liquid hourly space velocity (LHSV) of from 0.1 V/V/Hr. to 10 V/V/Hr

10. The method of claim 1 further comprising conducting a hydrocarbon feedstock through the at least one stage containing the catalyst formed from the precursor composition at hydrotreatment conditions, and conducting at least a portion of the hydrotreated feedstock through the at least one additional stage at second hydroprocessing conditions wherein the at least one additional stage at second hydroprocessing conditions includes a hydrocracking stage at hydrocracking conditions.

11. The method of claim 10 wherein the hydrocarbon feedstock is a distillate having a boiling range from 220°C to 600°C and contains at least 10 wppm nitrogen and a sulfur content ranging from 0.1 wt.% to 3 wt.%.

12. The method of claim 11, wherein the hydrocracking conditions include a temperature from 200° to 425°C, pressure of 200 psig to 3,000 psig, and liquid hourly space velocity from 0.5 to 10 V/V/Hr.

13. The method of any preceding claim wherein the hydrocarbon feedstock is conducted through the at least one additional stage containing the additional hydrotreatment catalyst at additional hydrotreatment conditions, and at least a portion of the hydrotreated feedstock is conducted through the at least one stage containing a catalyst formed from the precursor composition at hydrotreatment conditions.

14. The method of claim 13, wherein the hydrocarbon feedstock is a distillate having a boiling range from 140°C to 360°C and contains at least 10 wppm nitrogen and a sulfur content ranging from 0.1 wt.% to 3 wt.%.

15. The method of claim 14, wherein the additional hydrotreatment conditions include a temperature of from 250° to 450°C, hydrogen pressure of from 5 to 250 bar, liquid hourly space velocities of from 0.1 to 10 h⁻¹, and hydrogen treat gas rates of from 90 to 1780 m³/m³ (500 to 10000 SCF/B).

## Patentansprüche

1. Verfahren zum Hydroverarbeiten eines Einsatzmaterials, bei dem:
ein Reaktionssystem mit mehreren Katalysatorstufen bereitgestellt wird, wozu mindestens eine Stufe gehört, die einen metallischen Massenkatalysator enthält, der durch Sulfidierung einer Vorläuferzusammensetzung gebildet ist, die ein Metall der Gruppe VIII, ein Metall der Gruppe VIB und 10 Gew.% bis 60 Gew.% einer auf organischer Verbindung basierenden Komponente umfasst, die von einem organischen Komplexierungsmittel abgeleitet ist, das eine organische Säure ist, die eine funktionale Gruppe -COOH und mindestens eine zusätzliche funktionale Gruppe ausgewählt aus Carbonsäure: -COOH, Hydroxamatsäure: -NOH-C=O, Hydroxo: -OH, Keto: -C=O, Amin: -NH₂, Amid: -CO-NH₂, Imin: -CNOH, Epoxy: =COC= oder Thiol: -SH enthält, wobei die Katalysatorvorläuferzusammensetzung eine Oberfläche von 16 m²/g oder weniger aufweist, gemessen nach dem Brunauer-Ernett-Teller (BET)-Verfahren, der Kohlenstoffgehalt des Katalysators nach der Sulfidierung mindestens 10 Gew.% beträgt, und mindestens eine zusätzliche Katalysatorstufe einen anderen Katalysator enthält;
und ferner
a. ein Kohlenwasserstoffeinsatzmaterial durch die mindestens eine Stufe geführt wird, die den aus der Vorläuferzusammensetzung unter Hydrobehandlungsbedingungen gebildeten Katalysator enthält, und mindestens ein Teil des hydrobehandelten Einsatzmaterials durch die mindestens eine zusätzliche Stufe unter zweiten Hydroverarbeitungsbedingungen geführt wird; oder
b. ein Kohlenwasserstoffeinsatzmaterial durch die mindestens eine zusätzliche Stufe, die den zusätzlichen Hydrobehandlungskatalysator enthält, unter zusätzlichen Hydrobehandlungsbedingungen geführt wird und mindestens ein Teil des hydrobehandelten Einsatzmaterials durch die mindestens eine Stufe geführt wird, die einen Katalysator enthält, der aus der Vorläuferzusammensetzung unter Hydrobehandlungsbedingungen gebildet wurde.

2. Verfahren nach Anspruch 1, bei dem das Metall der Gruppe VIII Nickel oder Kobalt ist und das Metall der Gruppe VIB Molybdän oder Wolfram ist.

3. Verfahren nach Anspruch 1, bei dem der aus der Vorläuferzusammensetzung gebildete Katalysator ein metallischer Massenkatalysator ist, der aus einer Katalysatorvorläuferzusammensetzung mit einer Oberfläche von weniger als 10 m²/g gebildet ist.

4. Verfahren nach Anspruch 1, bei der der aus der Vorläuferzusammensetzung gebildete Katalysator ferner ein Übergangsmetall umfasst, das sich von dem Metall der Gruppe VIB und dem Metall der Gruppe VIII unterscheidet.

5. Verfahren nach Anspruch 1, bei dem Hydrobehandlungsbedingungen eine Temperatur von 250° bis 450°C, einen Wasserstoffdruck von 5 bis 250 bar, stündliche Flüssigkeitsdurchsätze von 0,1 bis 10 h⁻¹ und Wasserstoffbehandlungsgasraten von 90 bis 1780 m³/m³ (500 bis 10000 SCF/B) einschließen.

6. Verfahren nach Anspruch 1, bei dem das Kohlenwasserstoffeinsatzmaterial ein Destillat mit einem Siedebereich von 290°C bis 600°C ist und mindestens 10 Gew.ppm Stickstoff und einen Schwefelgehalt im Bereich von 0,1 Gew.% bis 3 Gew.% enthält.

7. Verfahren nach Anspruch 6, bei dem die Hydroverarbeitung ausgewählt ist aus der Gruppe bestehend aus Hydrierung von ungesättigten Verbindungen, Hydrodearomatisierung, katalytischem Entparaffinieren, Hydroisomerisierung und Ringöffnung.

8. Verfahren nach Anspruch 6, bei dem die Hydroverarbeitung Hydrierung von ungesättigten Verbindungen oder Hydrodearomatisierung ist und die Hydroverarbeitungsbedingungen eine Temperatur von 40°C bis 400°C, einen Druck von 100 psig bis 3000 psig, und einen stündlichen Flüssigkeitsdurchsatz (LHSV) von 0,3 V/V/h bis 2 V/V/h einschließen.

9. Verfahren nach Anspruch 6, bei dem die Hydroverarbeitung katalytisches Entparaffinieren oder Hydroisomerisierung ist, und die Hydroverarbeitungsbedingungen eine Temperatur von 200°C bis 500°C, einen Druck von 50 psig bis 3000 psig, und einen stündlichen Flüssigkeitsdurchsatz (LHSV) von 0,1 V/V/h bis 10 V/V/h einschließen.

10. Verfahren nach Anspruch 1, bei dem ferner in ein Kohlenwasserstoffeinsatzmaterial unter Hydrobehandlungsbedingungen durch die mindestens eine Stufe geführt wird, die den aus der Vorläuferzusammensetzung gebildeten Katalysator enthält, und mindestens ein Teil des hydrobehandelten Einsatzmaterials unter zweiten Hydroverarbeitungsbedingungen durch die mindestens eine zusätzliche Stufe geführt wird, wobei die mindestens eine zusätzliche Stufe unter zweiten Hydroverarbeitungsbedingungen eine Hydrocrackstufe unter Hydrocrackbedingungen einschließt.

11. Verfahren nach Anspruch 10, bei dem das Kohlenwasserstoffeinsatzmaterial ein Destillat mit einem Siedebereich von 220°C bis 600°C ist und mindestens 10 Gew.ppm Stickstoff und einen Schwefelgehalt im Bereich von 0,1 Gew.% bis 3 Gew.% enthält.

12. Verfahren nach Anspruch 11, bei dem die Hydrocrackbedingungen eine Temperatur von 200° bis 425°C, einen Druck von 200 psig bis 3000 psig, und einen stündlichen Flüssigkeitsdurchsatz von 0,5 bis 10 V/V/h einschließen.

13. Verfahren nach einem der vorhergehenden Ansprüche, bei dem das Kohlenwasserstoffeinsatzmaterial unter zusätzlichen Hydrobehandlungsbedingungen durch die mindestens eine zusätzliche Stufe, die den zusätzlichen Hydrobehandlungskatalysator enthält, geführt wird und mindestens ein Teil des hydrobehandelten Einsatzmateriats unter Hydrobehandlungsbedingungen durch die mindestens eine Stufe geführt wird, die einen aus der Vorläuferzusammensetzung gebildeten Katalysator enthält.

14. Verfahren nach Anspruch 13, bei dem das Kohlenwasserstoffeinsatzmaterial ein Destillat mit einem Siedebereich von 140°C bis 360°C ist und mindestens 10 Gew.ppm Stickstoff und einen Schwefelgehalt im Bereich von 0,1 Gew.% bis 3 Gew.% enthält.

15. Verfahren nach Anspruch 14, bei dem die zusätzlichen Hydrobehandlungsbedingungen eine Temperatur von 250° bis 450°C, einen Wasserstoffdruck von 5 bis 250 bar, stündliche Flüssigkeitsdurchsätze von 0,1 bis 10 h⁻¹ und Wasserstoffbehandlungsgasraten von 90 bis 1780 m³/m³ (500 bis 10000 SCF/B) einschließen.

## Revendications

1. Procédé pour l'hydrotraitement d'une charge de départ, consistant à :
fournir un système réactionnel à multiples étages de catalyseur, comprenant au moins un étage contenant un catalyseur métallique massif formé par sulfuration d'une composition de précurseurs comprenant un métal du groupe VIII, un métal du groupe VIB et de 10 % en poids à 60 % en poids d'un constituant à base de composé organique dérivé d'un agent complexant organique qui est un acide organique qui contient un groupe fonctionnel -COOH et au moins un groupe fonctionnel supplémentaire choisi parmi les groupes acide carboxylique -COOH, acide hydroxamique -NOH-C=O, hydroxy -OH, céto -C=O, amine -NH₂, amide :-CO-NH₂, imine : -CNOH, époxy : =COC= ou thiol : -SH, la composition de précurseurs de catalyseur ayant une surface spécifique, mesurée par la méthode de Brunauer-Emmett-Teller (BET), inférieure ou égale à 16 m²/g, la teneur en carbone du catalyseur après sulfuration étant d'au moins 10 % en poids, et au moins un étage de catalyseur supplémentaire contenant un catalyseur différent ;
et consistant en outre à
a. amener une charge de départ d'hydrocarbures à passer dans l'au moins un étage contenant le catalyseur formé à partir de la composition de précurseurs dans des conditions d'hydrotraitement et amener au moins une partie de la charge de départ hydrotraitée à passer dans l'au moins un étage supplémentaire dans des secondes conditions d'hydrotraitement ; ou
b. amener une charge de départ d'hydrocarbures à passer dans l'au moins un étage supplémentaire contenant le catalyseur d'hydrotraitement supplémentaire dans des conditions d'hydrotraitement supplémentaires et amener au moins une partie de la charge de départ hydrotraitée à passer dans l'au moins un étage contenant un catalyseur formé à partir de la composition de précurseurs dans des conditions d'hydrotraitement.

2. Procédé selon la revendication 1, dans lequel le métal du groupe VIII est le nickel ou le cobalt et le métal du groupe VIB est le molybdène ou le tungstène.

3. Procédé selon la revendication 1, dans lequel le catalyseur formé à partir de la composition de précurseurs est un catalyseur métallique massif formé à partir d'une composition de précurseurs de catalyseur ayant une surface spécifique inférieure à 10 m²/g.

4. Procédé selon la revendication 1, dans lequel le catalyseur formé à partir de la composition de précurseurs comprend en outre un métal de transition différent du métal du groupe VIB et du métal du groupe VIII.

5. Procédé selon la revendication 1, dans lequel les conditions d'hydrotraitement comprennent une température de 250 °C à 450 °C, une pression d'hydrogène de 5 à 250 bar, des vitesses spatiales horaires de liquide de 0,1 à 10 h⁻¹ et des taux de gaz de traitement à l'hydrogène de 90 à 1780 m³/m³ (500 à 10000 pi³ (std)/bl).

6. Procédé selon la revendication 1 dans lequel la charge de départ d'hydrocarbures est un distillat ayant un intervalle d'ébullition de 290 °C à 600 °C et contient au moins 10 ppm en poids d'azote et une teneur en soufre allant de 0,1 % en poids à 3 % en poids.

7. Procédé selon la revendication 6 dans lequel l'hydrotraitement est choisi dans le groupe constitué par l'hydrogénation de composés insaturés, l'hydrodésaromatisation, le déparaffinage catalytique, l'hydroisomérisation et l'ouverture de cycle.

8. Procédé selon la revendication 6, dans lequel l'hydrotraitement est l'hydrogénation de composés insaturés ou l'hydrodésaromatisation et les conditions d'hydrotraitement comprennent une température de 40 °C à 400 °C, une pression de 100 lb/po² manométrique à 3 000 lb/po² manométrique et une vitesse spatiale horaire de liquide (LHSV) de 0,3 v/v/h à 2 v/v/h.

9. Procédé selon la revendication 6, dans lequel l'hydrotraitement est le déparaffinage catalytique ou l'hydroisomérisation et les conditions d'hydrotraitement comprennent une température de 200 °C à 500 °C, une pression de 50 lb/po² manométrique à 3 000 lb/po² manométrique et une vitesse spatiale horaire de liquide (LHSV) de 0,1 v/v/h à 10 v/v/h.

10. Procédé selon la revendication 1 consistant en outre à amener une charge de départ d'hydrocarbures à passer dans l'au moins un étage contenant le catalyseur formé à partir de la composition de précurseurs dans des conditions d'hydrotraitement et amener au moins une partie de la charge de départ hydrotraitée à passer dans l'au moins un étage supplémentaire dans des secondes conditions d'hydrotraitement, dans lequel l'au moins un étage supplémentaire dans des secondes conditions d'hydrotraitement comprend un étage d'hydrocraquage dans des conditions d'hydrocraquage.

11. Procédé selon la revendication 10 dans lequel la charge de départ d'hydrocarbures est un distillat ayant un intervalle d'ébullition de 220 °C à 600 °C et contient au moins 10 ppm en poids d'azote et une teneur en soufre allant de 0,1 % en poids à 3 % en poids.

12. Procédé selon la revendication 11, dans lequel les conditions d'hydrocraquage comprennent une température de 200 °C à 425 °C, une pression de 200 lb/po² manométrique à 3 000 lb/po² manométrique et une vitesse spatiale horaire de liquide de 0,5 à 10 v/v/h.

13. Procédé selon une quelconque revendication précédente dans lequel la charge de départ d'hydrocarbures est amenée à passer dans l'au moins un étage supplémentaire contenant le catalyseur d'hydrotraitement supplémentaire dans des conditions d'hydrotraitement supplémentaires et au moins une partie de la charge de départ hydrotraitée est amenée à passer dans l'au moins un étage contenant un catalyseur formé à partir de la composition de précurseurs dans des conditions d'hydrotraitement.

14. Procédé selon la revendication 13, dans lequel la charge de départ d'hydrocarbures est un distillat ayant un intervalle d'ébullition de 140 °C à 360 °C et contient au moins 10 ppm en poids d'azote et une teneur en soufre allant de 0,1 % en poids à 3 % en poids.

15. Procédé selon la revendication 14, dans lequel les conditions d'hydrotraitement supplémentaires comprennent une température de 250 °C à 450 °C, une pression d'hydrogène de 5 à 250 bar, des vitesses spatiales horaires de liquide de 0,1 à 10 h⁻¹ et des taux de gaz de traitement à l'hydrogène de 90 à 1780 m³/m³ (500 à 10000 pi³ (std)/bl).
